# EUROPEAN PATENT APPLICATION

(11) **EP 4 832 451 A1**
(43) Date of publication of application: **28.10.2026**
(21) Application number: 25744551.0
(22) Date of filing: 20.01.2025
(51) Int. Cl.: H04L 49/90

(54) **METHOD FOR EXECUTING OPERATION ON INPUT/OUTPUT DEVICE BY CONFIDENTIAL VIRTUAL MACHINE, AND COMPUTING DEVICE**

(30) Priority: 26.01.2024 CN 202410117681
(71) Applicant: Huawei Technologies Co., Ltd., Shenzhen, Guangdong 518129 (CN)
(72) Inventor: HU, Kekai, Shenzhen, Guangdong 518129 (CN)
(74) Representative: Huawei European IPR
(86) International application number: PCT/CN2025/073451
(87) International publication number: WO 2025/157110

(57) **Abstract**

This application provides a method for performing an operation on an I/O device by a CVM, and a compute device, and may be applied to the field of computer technologies. The method for performing an operation on an I/O device by a CVM is applied to a compute device, and the compute device includes an REE and a TEE. The REE includes a first REE buffer, and the TEE includes a communication interface, a first CVM, and a first TEE buffer. The method includes: The communication interface receives a first I/O request, and synchronizes state information of a first I/O device in the first TEE buffer and state information of the first I/O device in the first REE buffer. The first CVM performs an operation on the first I/O device based on the synchronized state information of the first I/O device in the first TEE buffer. According to the method for performing an operation on an I/O device by a CVM provided in this application, state information of the I/O device can be consistent in the REE and the TEE, thereby avoiding a use conflict of the I/O device.

## Description

This application claims priority to Chinese Patent Application No. 202410117681.3, filed with the China National Intellectual Property Administration on January 26, 2024, and entitled "METHOD FOR PERFORMING OPERATION ON INPUT/OUTPUT DEVICE BY CONFIDENTIAL VIRTUAL MACHINE, AND COMPUTE DEVICE", which is incorporated herein by reference in its entirety.

### TECHNICAL FIELD

This application relates to the field of computer technologies, and in particular, to a method for performing an operation on an input/output device by a confidential virtual machine, and a compute device.

### BACKGROUND

To protect data in use, a compute device usually uses a confidential computational architecture. To be specific, compute resources on the compute device are classified into a rich execution environment (rich execution environment, REE) and a trusted execution environment (trusted execution environment, TEE).

The REE provides a common operating system and application environment, and allows users to freely install and run various applications. In addition, data in the REE may not only be used inside the REE, but also be transmitted and shared through an external interface of the compute device. Therefore, data computing in the REE may be threatened by malware, network attacks, and data leakage.

The TEE provides a hardware-level secure and isolated environment, and does not allow users to freely install and run applications. Only verified and authorized applications can be installed and run in the TEE. In addition, data in the TEE can be used only in the TEE. Therefore, data computing in the TEE is not exposed to the REE and cannot be obtained by malware or attackers.

To ensure high security of the TEE, a confidential virtual machine (confidential virtual machine, CVM) run in the TEE is not allowed to directly access an I/O device. As a result, all applications (for example, a big data application and an AI application) that need to access the I/O device in the CVM cannot be directly run in the TEE, imposing significant ecosystem limitations on development of the TEE. This is one of main pain points in migrating the applications such as the big data application and the AI application to the TEE.

In addition, to ensure high security of the TEE, the CVM is not allowed to directly access a shared buffer in the REE. The shared buffer is used to store usage of the I/O device by a virtual machine (virtual machine, VM) in the REE. Therefore, the CVM cannot learn of the usage of the I/O device by the VM in the REE.

If the CVM is allowed to directly access the I/O device, the VM and the CVM independently communicate with the I/O device. Consequently, a use conflict of the I/O device occurs.

### SUMMARY

To resolve the foregoing technical problem, this application provides a method for performing an operation on an input/output device by a confidential virtual machine, and a compute device, so that state information of the I/O device can be consistent in an REE and a TEE, thereby avoiding a use conflict of the I/O device.

According to a first aspect, a method for performing an operation on an input/output device by a confidential virtual machine is provided, and is applied to a compute device. The compute device includes a rich execution environment REE and a trusted execution environment TEE. Hardware occupied by a compute resource of the REE is isolated from hardware occupied by a compute resource of the TEE. The REE includes a first REE buffer. The TEE includes a communication interface, a first CVM, and a first TEE buffer. The first CVM is run based on the compute resource of the TEE. The method includes:
The communication interface receives a first I/O request, and synchronizes state information of a first I/O device in the first TEE buffer and state information of the first I/O device in the first REE buffer, where the first I/O request indicates the first CVM to perform a first I/O operation on the first I/O device, and the state information of the first I/O device indicates that a state of the first I/O device is an idle state or an occupied state.

The first CVM performs an operation on the first I/O device based on the synchronized state information of the first I/O device in the first TEE buffer, where the synchronized state information of the first I/O device in the first TEE buffer indicates a current state of the first I/O device.

In the foregoing solution, when the first CVM in the TEE needs to establish a communication connection to the first I/O device to complete the first I/O request, the state information of the first I/O device in the first REE buffer and the state information of the first I/O device in the first TEE buffer are synchronized through the communication interface in the TEE, so that the state information of the first I/O device in the first REE buffer is the same as that in the first TEE, thereby achieving an effect that the state information of the first I/O device is consistent in the REE and the TEE. Therefore, the first CVM performs an operation on the first I/O device based on the current state of the first I/O device. For example, when the current state of the first I/O device is the idle state, the first CVM immediately uses the first I/O device; or when the current state of the first I/O device is the occupied state, the first CVM waits for the first I/O device. In this way, a conflict with use of the first I/O device by a VM in the REE can be avoided.

In some possible implementations, the REE further includes a shadow buffer, the shadow buffer is configured to store the state information of the first I/O device, and the state information of the first I/O device in the shadow buffer indicates the current state of the first I/O device. That the communication interface synchronizes the state information of the first I/O device in the first TEE buffer and the state information of the first I/O device in the first REE buffer includes: The communication interface synchronizes the state information of the first I/O device in the first TEE buffer and the state information of the first I/O device in the first REE buffer by using the state information of the first I/O device in the shadow buffer.

In the foregoing solution, because the state information of the first I/O device stored in the shadow buffer indicates the current state of the first I/O device, the communication interface synchronizes the state information of the first I/O device in the first TEE buffer and the state information of the first I/O device in the first REE buffer by using the state information of the first I/O device in the shadow buffer, so that the synchronized state information of the first I/O device in the first TEE buffer can also indicate the current state of the first I/O device, and the synchronized state information of the first I/O device in the first REE buffer can also indicate the current state of the first I/O device.

In some possible implementations, the REE further includes a first VM, and the first VM is run based on the compute resource of the REE.

Before that the communication interface synchronizes the state information of the first I/O device in the first TEE buffer and the state information of the first I/O device in the first REE buffer by using the state information of the first I/O device in the shadow buffer, the method further includes: When modification time of the state information of the first I/O device in the first REE buffer is later than modification time of the state information of the first I/O device in the first TEE buffer, the first VM writes the state information of the first I/O device in the first REE buffer into the shadow buffer, to store the state information of the first I/O device in the shadow buffer.

That the communication interface synchronizes the state information of the first I/O device in the first TEE buffer and the state information of the first I/O device in the first REE buffer by using the state information of the first I/O device in the shadow buffer includes: The communication interface writes the state information of the first I/O device in the shadow buffer into the first TEE buffer, to obtain the synchronized state information of the first I/O device in the first TEE buffer, where operation permission of the communication interface for the shadow buffer is higher than operation permission of the first VM for the shadow buffer.

In some possible implementations, the REE further includes a control module.

That the communication interface synchronizes the state information of the first I/O device in the first TEE buffer and the state information of the first I/O device in the first REE buffer by using the state information of the first I/O device in the shadow buffer includes: When modification time of the state information of the first I/O device in the first REE buffer is earlier than modification time of the state information of the first I/O device in the first TEE buffer, the communication interface writes the state information of the first I/O device in the first TEE buffer into the shadow buffer, to store the state information of the first I/O device in the shadow buffer.

The method further includes: The control module writes the state information of the first I/O device in the shadow buffer into the first REE buffer, to obtain the synchronized state information of the first I/O device in the first REE buffer, where the synchronized state information of the first I/O device in the first REE buffer indicates the current state of the first I/O device.

In the foregoing solution, in a process of sharing, with the first VM in the REE, usage of the first I/O device by the first CVM in the TEE (that is, the state information of the first I/O device), the communication interface first writes the state information of the first I/O device in the first TEE buffer into the shadow buffer in the REE. When the first REE buffer is not operated, the control module writes the state information of the first I/O device in the shadow buffer into the first REE buffer. In this way, an operation conflict on the first REE buffer caused by a fact that the operation permission of the communication interface in the TEE is higher than the operation permission of the first VM in the REE can be avoided, thereby preventing data disorder in the first REE buffer, and helping improve stability of sharing the state information of the first I/O device between the REE and the TEE.

In addition, the communication interface always needs to write only the state information of the I/O device in the TEE into the shadow buffer in the REE, or the communication interface always needs to read only the state information of the I/O device in the REE from the shadow buffer in the REE, and does not need to dynamically adjust an operation object based on an access relationship between the VM in the REE and the I/O device. In this way, an operation is simple and reliable, and a risk of inconsistency or a loss of the state information of the I/O device is also reduced.

In some possible implementations, there are at least the following two implementations in which the operation permission of the communication interface for the shadow buffer is higher than the operation permission of the first VM for the shadow buffer: In a first implementation, access of the first VM is rejected when the communication interface operates the shadow buffer. In a second implementation, access of the communication interface is allowed when the first VM operates the shadow buffer.

In some possible implementations, the TEE further includes a second CVM and a second TEE buffer, the REE further includes a second REE buffer, and the second CVM is run based on the compute resource of the TEE. The method further includes:

The communication interface receives a second I/O request, and synchronizes state information of a second I/O device in the second TEE buffer and state information of the second I/O device in the second REE buffer, where the second I/O request indicates the second CVM to perform a second I/O operation on the second I/O device, and the state information of the second I/O device indicates that a state of the second I/O device is the idle state or the occupied state.

The second CVM performs an operation on the second I/O device based on the synchronized state information of the second I/O device in the second TEE buffer, where the synchronized state information of the second I/O device in the second TEE buffer indicates a current state of the second I/O device.

In the foregoing solution, in a process in which the CVM in the TEE and the VM in the REE share the state information of the I/O device, the state information of the I/O device in the TEE is always transmitted to the REE through a same communication interface, or the state information of the I/O device in the REE is always transmitted to the TEE through a same communication interface. In the TEE, only one communication interface is used to transmit the state information of the I/O device. This can reduce complexity of this technical solution, simplify a development process, and further save compute resources and hardware of the TEE. More importantly, compared with a solution in which a plurality of communication interfaces are used, where each communication interface may become an attack target of an insecure device, in this technical solution, only one communication interface is used, so that an attack surface and potential security vulnerabilities can be reduced, and threats to the TEE can be reduced. In addition, because the communication interface transmits the state information of the I/O device, security and privacy of data computing in the TEE can still be ensured.

According to a second aspect, a compute device is provided. The compute device includes a rich execution environment REE and a trusted execution environment TEE. Hardware occupied by a compute resource of the REE is isolated from hardware occupied by a compute resource of the TEE. The REE includes a first REE buffer. The TEE includes a communication interface, a first CVM, and a first TEE buffer. The first CVM is run based on the compute resource of the TEE.

The communication interface is configured to receive a first I/O request, where the first I/O request indicates the first CVM to perform a first I/O operation on a first I/O device.

The communication interface is further configured to synchronize state information of the first I/O device in the first TEE buffer and state information of the first I/O device in the first REE buffer, where the state information of the first I/O device indicates that a state of the first I/O device is an idle state or an occupied state.

The first CVM is configured to perform an operation on the first I/O device based on the synchronized state information of the first I/O device in the first TEE buffer, where the synchronized state information of the first I/O device in the first TEE buffer indicates a current state of the first I/O device.

In some possible implementations, the REE further includes a shadow buffer. The shadow buffer is configured to store the state information of the first I/O device, and the state information of the first I/O device in the shadow buffer indicates the current state of the first I/O device.

The communication interface is specifically configured to synchronize the state information of the first I/O device in the first TEE buffer and the state information of the first I/O device in the first REE buffer by using the state information of the first I/O device in the shadow buffer.

In some possible implementations, the REE further includes a first VM. The first VM is run based on the compute resource of the REE.

The first VM is configured to: before the communication interface synchronizes the state information of the first I/O device in the first TEE buffer and the state information of the first I/O device in the first REE buffer by using the state information of the first I/O device in the shadow buffer, when modification time of the state information of the first I/O device in the first REE buffer is later than modification time of the state information of the first I/O device in the first TEE buffer, write the state information of the first I/O device in the first REE buffer into the shadow buffer, to store the state information of the first I/O device in the shadow buffer.

The communication interface is specifically configured to write the state information of the first I/O device in the shadow buffer into the first TEE buffer, to obtain the synchronized state information of the first I/O device in the first TEE buffer, where
operation permission of the communication interface for the shadow buffer is higher than operation permission of the first VM for the shadow buffer.

In some possible implementations, the REE further includes a control module.

The communication interface is specifically configured to: when modification time of the state information of the first I/O device in the first REE buffer is earlier than modification time of the state information of the first I/O device in the first TEE buffer, write the state information of the first I/O device in the first TEE buffer into the shadow buffer, to store the state information of the first I/O device in the shadow buffer.

The control module is configured to write the state information of the first I/O device in the shadow buffer into the first REE buffer, to obtain the synchronized state information of the first I/O device in the first REE buffer, where the synchronized state information of the first I/O device in the first REE buffer indicates the current state of the first I/O device.

In some possible implementations, access of the first VM is rejected when the shadow buffer is operated by the communication interface; or access of the communication interface is allowed when the shadow buffer is operated by the first VM.

In some possible implementations, the TEE further includes a second CVM and a second TEE buffer. The second CVM is run based on the compute resource of the TEE. The REE further includes a second REE buffer.

The communication interface is further configured to receive a second I/O request, where the second I/O request indicates the second CVM to perform a second I/O operation on a second I/O device.

The communication interface is further configured to synchronize state information of the second I/O device in the second TEE buffer and state information of the second I/O device in the second REE buffer. The state information of the second I/O device indicates that a state of the second I/O device is the idle state or the occupied state.

The second CVM is configured to perform an operation on the second I/O device based on the synchronized state information of the second I/O device in the second TEE buffer, where the synchronized state information of the second I/O device in the second TEE buffer indicates a current state of the second I/O device.

According to a third aspect, a compute device is provided. The compute device includes a processor and a memory. The memory is configured to store instructions, and the processor is configured to execute the instructions. When the processor executes the instructions, the method according to any one of the first aspect is implemented.

According to a fourth aspect, a computer program product including instructions is provided. When the instructions are run by a compute device, the compute device is caused to perform the method according to any one of the first aspect.

According to a fifth aspect, a computer-readable storage medium is provided. The computer-readable storage medium includes computer program instructions. When the computer program instructions are executed by a compute device, the compute device performs the method according to any one of the first aspect.

### BRIEF DESCRIPTION OF DRAWINGS

FIG. 1 is a diagram of an architecture of a compute device according to an embodiment of this application;
FIG. 2 is a schematic flowchart of a method for performing an operation on an I/O device by a CVM according to an embodiment of this application;
FIG. 3a and FIG. 3b are a schematic flowchart of another method for performing an operation on an I/O device by a CVM according to an embodiment of this application;
FIG. 4 is a diagram of an architecture of another compute device according to an embodiment of this application;
FIG. 5 is a schematic flowchart of another method for performing an operation on an I/O device by a CVM according to an embodiment of this application;
FIG. 6a and FIG. 6b are a schematic flowchart of another method for performing an operation on an I/O device by a CVM according to an embodiment of this application; and
FIG. 7 is a diagram of a structure of a compute device according to an embodiment of this application.

### DESCRIPTION OF EMBODIMENTS

The following describes technical solutions in embodiments of this application with reference to accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

To resolve a current problem that a conflict occurs between use of an I/O device by a VM in an REE and use of an I/O device by a CVM in a TEE on a compute device, this application provides two types of compute devices. Both a first type of compute device and a second type of compute device may share, through a communication interface in the TEE, information about use of the I/O device by a VM in the REE with the CVM in the TEE, and share, through the communication interface in the TEE, information about use of the I/O device by the CVM in the TEE with the VM in the REE, so that state information of the I/O device is consistent in the REE and the TEE, thereby avoiding a use conflict of the I/O device.

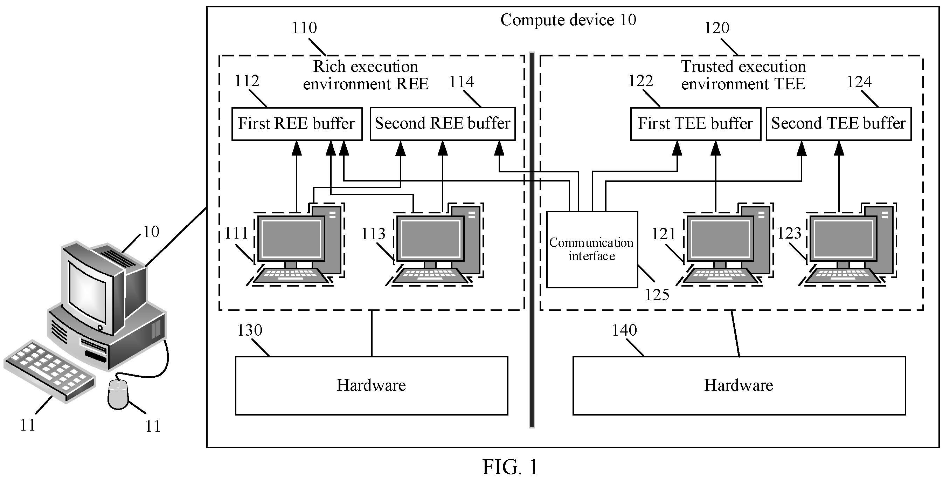

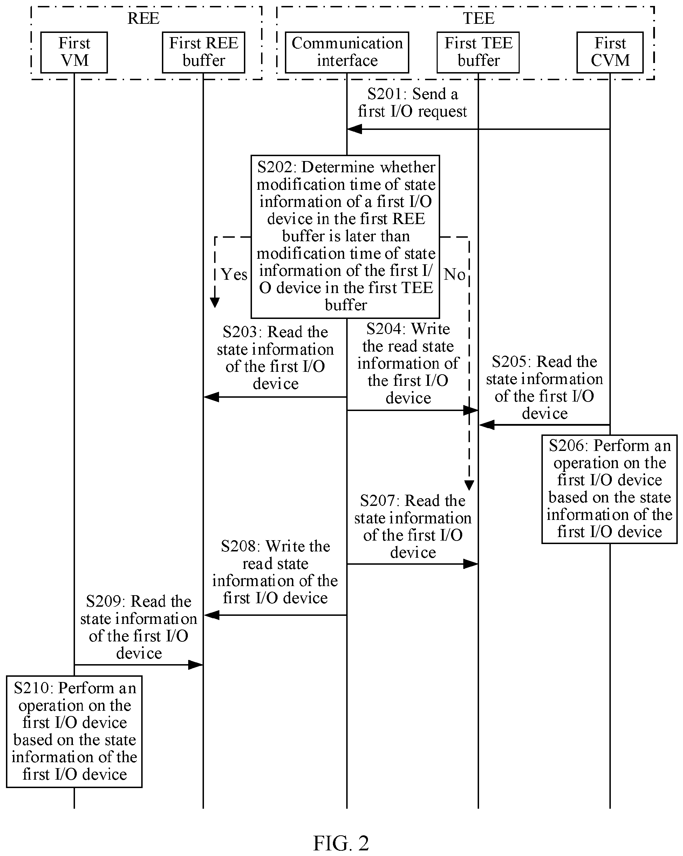

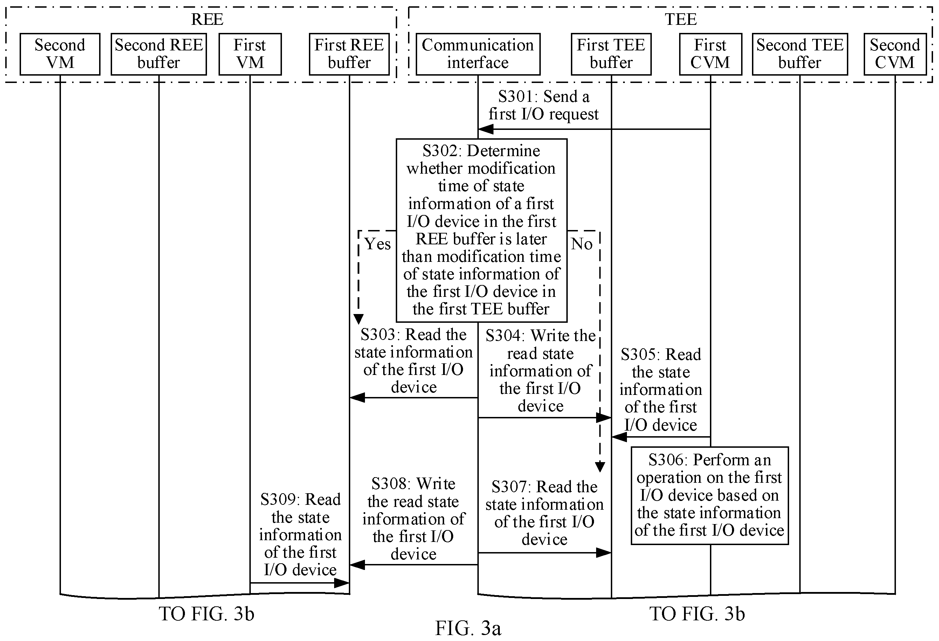

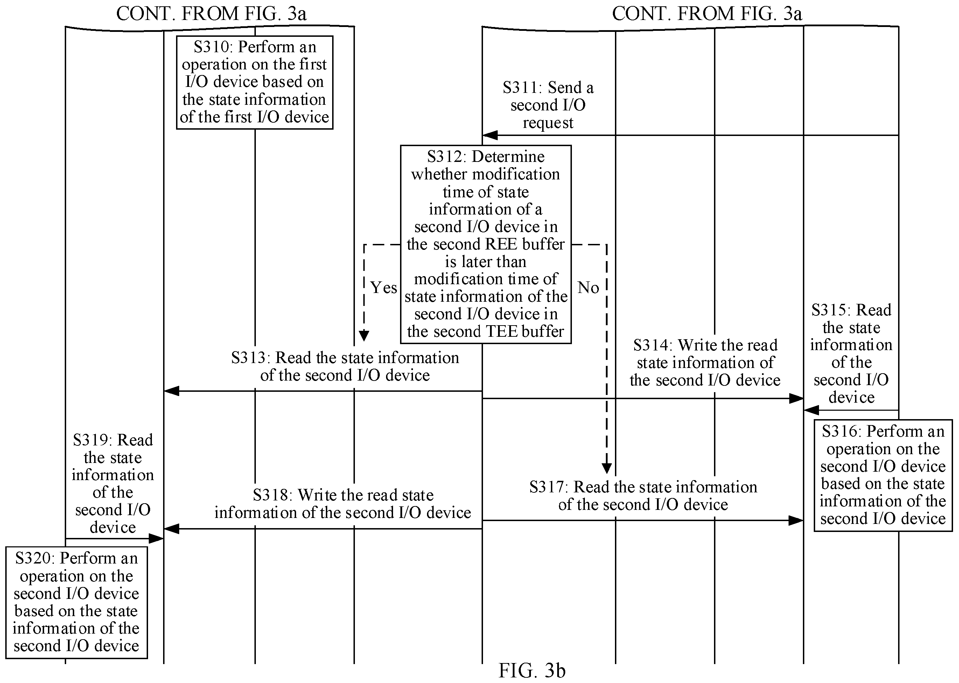

For the first type of compute device, refer to FIG. 1 and descriptions of related content. In addition, for a method for performing an operation on an I/O device by a CVM that is implemented based on the compute device in FIG. 1, refer to FIG. 2, FIG. 3a, FIG. 3b, and descriptions of related content. According to the method for performing an operation on an I/O device by a CVM, a speed of sharing state information of the I/O device between the REE and the TEE can be increased.

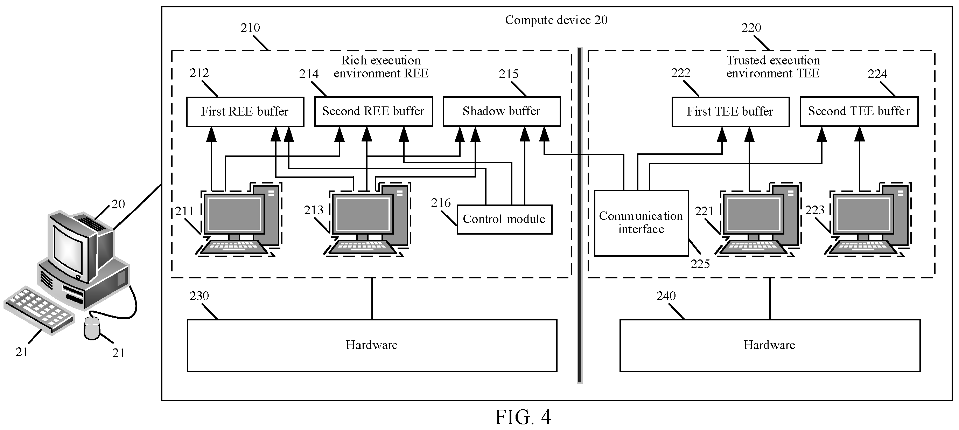

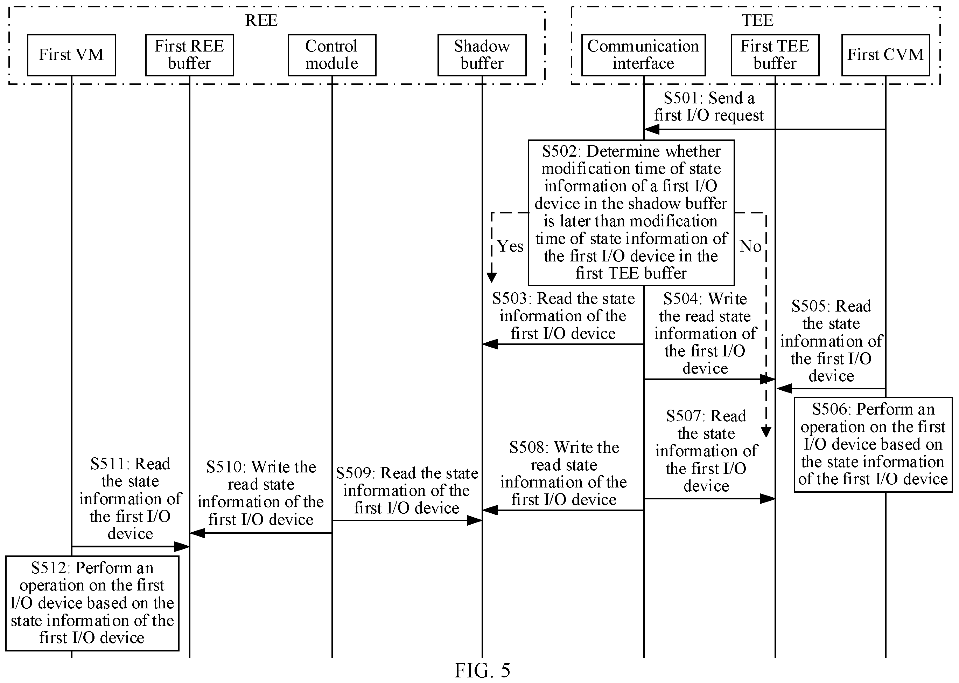

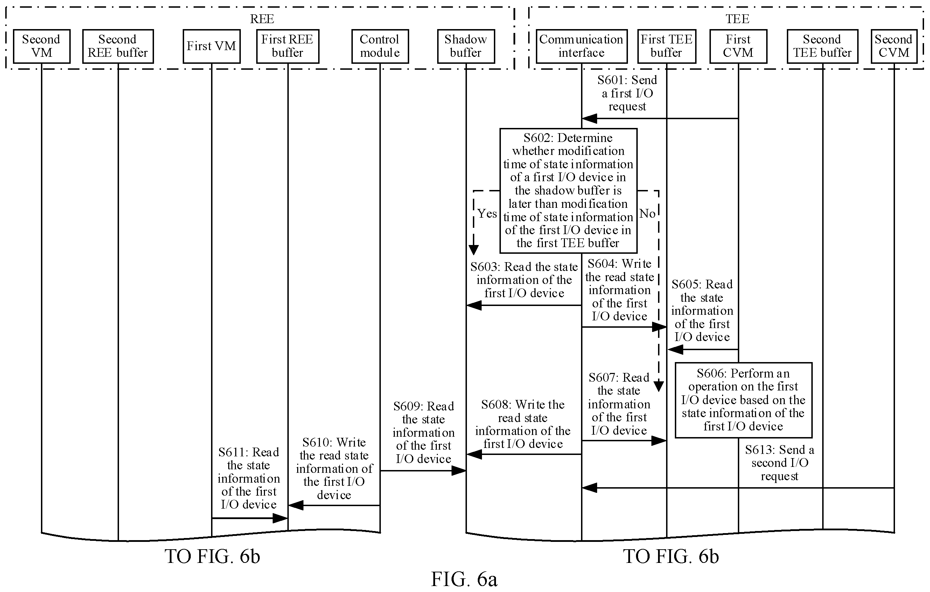

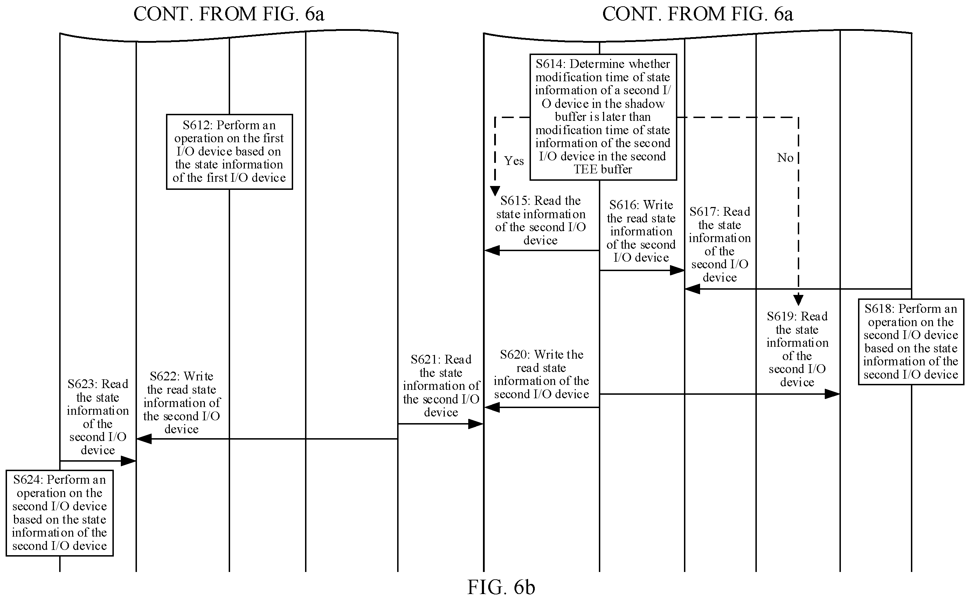

For the second type of compute device, refer to FIG. 4 and descriptions of related content. In addition, for a method for performing an operation on an I/O device by a CVM that is implemented based on the compute device in FIG. 4, refer to FIG. 5, FIG. 6a, FIG. 6b, and descriptions of related content. According to the method for performing an operation on an I/O device by a CVM, stability of sharing state information of the I/O device between the REE and the TEE can be improved.

The following separately describes the foregoing two types of compute devices and methods for performing an operation on an I/O device by a CVM that correspond to the two types of compute devices.
I. First type of compute device and method for performing an operation on an I/O device by a CVM that corresponds to the first compute device

FIG. 1 is a diagram of an architecture of a compute device according to an embodiment of this application. As shown in FIG. 1, the architecture includes a compute device 10 and I/O devices 11. The compute device 10 and the I/O device 11 may communicate with each other.

The compute device 10 is an electronic device that can perform computation, processing, and data storage, for example, a server, a supercomputer, a personal computer, a workstation, or a mobile device. The compute device 10 includes a plurality of physical components (that is, hardware), and specifically includes a mainboard, a processor (for example, a CPU or a GPU), a memory module, a hard disk drive, and the like. The compute device 10 may execute various compute tasks based on compute resources and storage resources provided by the hardware, for example, a mathematical operation, a logical operation, data processing, and storage. The compute resource is hardware and software in the compute device 10 that are used to execute a compute task, and includes a central processing unit (central processing unit, CPU), a graphics processing unit (graphics processing unit, GPU), a software framework and library (for example, an operating system, a programming language, or an algorithm library), and the like. The storage resource is hardware and software in the compute device 10 that are used to store data and a program, and includes an internal memory (for example, a memory), an external memory (for example, a hard disk drive, a solid-state drive, an optical disk drive, or a USB flash drive), and the like.

The I/O device 11 is a device configured to interact with the outside of the compute device 10, for example, a keyboard, a mouse, a display, a printer, a scanner, a camera, an audio device (for example, a speaker, an earphone, or a microphone), a disk drive (for example, a hard disk drive or a solid-state drive), an optical disk drive (for example, a CD-ROM or a DVD-ROM), a USB device (for example, a USB flash drive or an external hard disk drive), a network adapter, a touchscreen, an expansion card (for example, a graphics processing unit, an audio card, or a network interface card), or a sensor (for example, a temperature sensor, a pressure sensor, or an acceleration sensor). The I/O device 11 is responsible for receiving input information from a user or another device, and transferring output information processed by the compute device 10 to the user or the another device.

The architecture of the compute device shown in FIG. 1 is described by using an example in which the compute device 10 has two I/O devices. In actual application, there may be fewer or more I/O devices 11 that communicate with the compute device 10, and there may be various types of I/O devices. This is not specifically limited herein.

A communication process between the compute device 10 and the I/O device 11 may be divided into the following two phases:

### (1) Input phase

The I/O device 11 receives input information (for example, an image, a text, or a sound) of a user or another device. Then, the I/O device 11 converts the received input information into an input signal, and sends the input signal to the compute device 10. After receiving the input signal, the compute device 10 transmits the input signal to an application or a processor in the compute device 10, so that the application or the processor performs a corresponding I/O operation (for example, displaying an input text, moving a cursor, or executing a command) based on the received input signal.

### (2) Output phase

The application or the processor in the compute device 10 generates output information (for example, an image, a text, or a sound), and transmits the output information to the compute device 10. Then, the compute device 10 converts the received output information into an output signal, and sends the output signal to the I/O device 11. The I/O device 11 performs a corresponding I/O operation (for example, displaying a text, playing a video, or printing data) based on the received output signal.

A communication connection between the compute device 10 and the I/O device 11 may be a wired connection, or may be a wireless connection. This is not specifically limited in this application.

In some possible implementations, the compute device 10 includes a rich execution environment REE 110 and a trusted execution environment TEE 120. Hardware (that is, hardware 130 in FIG. 1) occupied by a compute resource of the rich execution environment REE 110 is isolated from hardware (that is, hardware 140 in FIG. 1) occupied by a compute resource of the trusted execution environment TEE 120. The following separately describes the rich execution environment REE 110 and the trusted execution environment TEE 120.

### (I) Rich execution environment REE 110

The rich execution environment REE 110 includes a first VM 111, a first REE buffer 112, a second VM 113, and a second REE buffer 114. The following describes functions of these components.

### (1) First VM 111

The first VM 111 is a complete computer system that is implemented by using a network functions virtualization (network functions virtualization, NFV) technology, that has a complete hardware system function simulated by software, and that is run in a completely isolated environment. Because the first VM 111 is implemented by using the NFV technology, a security protection mechanism and hardware support of the first VM 111 are weak. Therefore, the first VM 111 has a low security level, and provides weak protection for sensitive data and a key program. However, the first VM 111 has high flexibility, and can run various applications and operating systems.

The first VM 111 may transmit data in the first VM 111 to the outside of the compute device 10 through the I/O device 11, and receive data from the outside of the compute device 10. The first VM 111 is allowed to access all I/O devices 11 in the compute device 10, or is allowed to access only some I/O devices 11 in the compute device 10, or is not allowed to access the I/O devices 11 in the compute device 10. This is not specifically limited herein.

### (2) First REE buffer 112

The first REE buffer 112 may be arranged in an internal memory and/or an external memory that are/is allocated by the compute device 10 to the rich execution environment REE 110, and is configured to store state information of an I/O device 11 that is allowed to be accessed by the first VM 111. The state information of the I/O device 11 indicates that a state of the I/O device 11 is an idle state or an occupied state. For example, if the first VM 111 is allowed to access only one of the I/O devices 11 in FIG. 1, the first REE buffer 112 stores state information of the I/O device 11, and does not store state information of the other I/O device 11.

The first REE buffer 112 may be implemented by using software or hardware. In an example of a software implementation, the first REE buffer 112 may be implemented by using code run on a compute instance of the rich execution environment REE 110. The compute instance may be a confidential virtual machine and/or a container. In an example of a hardware implementation, the first REE buffer 112 may be implemented by using hardware such as a memory chip or a cache chip allocated by the compute device 10 to the rich execution environment REE 110.

### (3) Second VM 113

The second VM 113 is a complete computer system that is implemented by using the NFV technology, that has a complete hardware system function simulated by software, and that is run in a completely isolated environment. Because the second VM 113 is implemented by using the NFV technology, a security protection mechanism and hardware support of the second VM 113 are weak. Therefore, the second VM 113 has a low security level, and provides weak protection for sensitive data and a key program. However, the second VM 113 has high flexibility, and can run various applications and operating systems.

The second VM 113 may transmit data in the second VM 113 to the outside of the compute device 10 through the I/O device 11, and receive data from the outside of the compute device 10. The second VM 113 is allowed to access all I/O devices 11 in the compute device 10, or is allowed to access only some I/O devices 11 in the compute device 10, or is not allowed to access the I/O devices 11 in the compute device 10. This is not specifically limited herein.

The second VM 113 and the first VM 111 share hardware allocated by the compute device 10 to the rich execution environment REE 110. In addition, the second VM 113 and the first VM 111 may communicate with each other through a network. However, the second VM 113 and the first VM 111 can independently configure and manage compute resources, storage resources, and network resources of the second VM 113 and the first VM 111, can independently run applications and operating systems of the second VM 113 and the first VM 111, and can further ensure that an operation and data of either the second VM 113 or the first VM 111 do not affect running of the other VM.

### (4) Second REE buffer 114

The second REE buffer 114 may be arranged in an internal memory and/or an external memory that are/is allocated by the compute device 10 to the rich execution environment REE 110, and is configured to store state information of an I/O device 11 that is allowed to be accessed by the second VM 113. The state information of the I/O device 11 indicates that a state of the I/O device 11 is the idle state or the occupied state. For example, if the second VM 113 is allowed to access only one of the I/O devices 11 in FIG. 1, the second REE buffer 114 stores state information of the I/O device 11, and does not store state information of the other I/O device 11.

The second REE buffer 114 may be implemented by using software or hardware. An implementation of the second REE buffer 114 is similar to an implementation of the first REE buffer 112 in (2) First REE buffer 112. For brevity of the specification, details are not described herein again.

In some possible implementations, the first VM 111 may further perform an operation on another REE buffer, or the second VM 113 may further perform an operation on another REE buffer. Specifically, when the I/O device 11 that is allowed to be accessed by the first VM 111 is the same as the I/O device 11 that is allowed to be accessed by the second VM 113, the first REE buffer 112 and the second REE buffer 114 store the state information of the same I/O device 11. Therefore, if the first VM 111 changes the state of the same I/O device 11, the first VM 111 writes new state information of the same I/O device 11 into the first REE buffer 112 and the second REE buffer 114; or if the second VM 113 changes the state of the same I/O device 11, the second VM 113 writes new state information of the same I/O device 11 into the first REE buffer 112 and the second REE buffer 114.

It should be understood that (1) First VM 111 to (4) Second REE buffer 114 in (I) Rich execution environment REE 110 are described by using an example in which the rich execution environment REE 110 includes two VMs and two REE buffers. In actual application, there may be one or more VMs and one or more REE buffers. This is not specifically limited in this application.

### (II) Trusted execution environment TEE 120

The trusted execution environment TEE 120 further includes a first CVM 121, a first TEE buffer 122, a second CVM 123, a second TEE buffer 124, and a communication interface 125. The following describes functions of these components.

### (1) First CVM 121

The first CVM 121 is a complete computer system that is implemented by using a secure encrypted virtualization (secure encrypted virtualization, SEV) technology, that has a complete hardware system function simulated by software, and that is run in a completely isolated environment. Because the first CVM 121 is implemented by using the SEV technology, a security protection mechanism and hardware support of the first CVM 121 are strong. Therefore, the first CVM 121 has a high security level, and provides strong protection for sensitive data and a key program. However, the first CVM 121 has greater restrictions, can run only a verified and authorized application and operating system, and is strictly monitored by the trusted execution environment TEE 120.

The first CVM 121 may transmit data in the first CVM 121 to the outside of the compute device 10 through the I/O device 11, and receive data from the outside of the compute device 10. The first CVM 121 is allowed to access all I/O devices 11 in the compute device 10, or is allowed to access only some I/O devices 11 in the compute device 10, or is not allowed to access the I/O devices 11 in the compute device 10. This is not specifically limited herein.

### (2) First TEE buffer 122

The first TEE buffer 122 may be arranged in an internal memory and/or an external memory that are/is allocated by the compute device 10 to the trusted execution environment TEE 120, and is configured to store state information of an I/O device 11 that is allowed to be accessed by the first CVM 121. The state information of the I/O device 11 indicates that a state of the I/O device 11 is an idle state or an occupied state. For example, if the first CVM 121 is allowed to access only one of the I/O devices 11 in FIG. 1, the first TEE buffer 122 stores state information of the I/O device 11, and does not store state information of the other I/O device 11.

The first TEE buffer 122 may be implemented by using software or hardware. In an example of a software implementation, the first TEE buffer 122 may be implemented by using code run on a compute instance of the trusted execution environment TEE 120. The compute instance may be a confidential virtual machine and/or a container. In an example of a hardware implementation, the first TEE buffer 122 may be implemented by using hardware such as a memory chip or a cache chip allocated by the compute device 10 to the trusted execution environment TEE 120.

### (3) Second CVM 123

The second CVM 123 is a complete computer system that is implemented by using the SEV technology, that has a complete hardware system function simulated by software, and that is run in a completely isolated environment. Because the second CVM 123 is implemented by using the SEV technology, a security protection mechanism and hardware support of the second CVM 123 are strong. Therefore, the second CVM 123 has a high security level, and provides strong protection for sensitive data and a key program. However, the second CVM 123 has greater restrictions, can run only a verified and authorized application and operating system, and is strictly monitored by the trusted execution environment TEE 120.

The second CVM 123 may transmit data in the second CVM 123 to the outside of the compute device 10 through the I/O device 11, and receive data from the outside of the compute device 10. The second CVM 123 is allowed to access all I/O devices 11 in the compute device 10, or is allowed to access only some I/O devices 11 in the compute device 10, or is not allowed to access the I/O devices 11 in the compute device 10. This is not specifically limited herein.

The second CVM 123 and the first CVM 121 share hardware allocated by the compute device 10 to the trusted execution environment TEE 120. In addition, the second CVM 123 and the first CVM 121 may communicate with each other through a network. However, the second CVM 123 and the first CVM 121 can independently configure and manage compute resources, storage resources, and network resources of the second CVM 123 and the first CVM 121, can independently run applications and operating systems of the second CVM 123 and the first CVM 121, and can further ensure that an operation and data of either the second CVM 123 or the first CVM 121 do not affect running of the other CVM.

### (4) Second TEE buffer 124

The second TEE buffer 124 may be arranged in an internal memory and/or an external memory that are/is allocated by the compute device 10 to the trusted execution environment TEE 120, and is configured to store state information of an I/O device 11 that is allowed to be accessed by the second CVM 123. The state information of the I/O device 11 indicates that a state of the I/O device 11 is the idle state or the occupied state. For example, if the second CVM 123 is allowed to access only one of the I/O devices 11 in FIG. 1, the second TEE buffer 124 stores state information of the I/O device 11, and does not store state information of the other I/O device 11.

The second TEE buffer 124 may be implemented by using software or hardware. An implementation of the second TEE buffer 124 is similar to an implementation of the first TEE buffer 122 in (2) First TEE buffer 122. For brevity of the specification, details are not described herein again.

### (5) Communication interface 125

The communication interface 125 is configured to transmit state information of an I/O device 11 between the rich execution environment REE 110 and the trusted execution environment TEE 120. Specifically, the communication interface 125 may be configured to transmit state information of an I/O device 11 stored in the REE buffer in the rich execution environment REE 110 to the TEE buffer in the trusted execution environment TEE 120, and may be configured to transmit state information of an I/O device 11 stored in the TEE buffer in the trusted execution environment TEE 120 to the REE buffer in the rich execution environment REE 110.

For example, in FIG. 1, the communication interface 125 may be configured to transmit state information of an I/O device 11 in the first REE buffer 112 and/or the second REE buffer 114 to the first TEE buffer 122 and/or the second TEE buffer 124, and may be configured to transmit state information of an I/O device 11 in the first TEE buffer 122 and/or the second TEE buffer 124 to the first REE buffer 112 and/or the second REE buffer 114.

In some possible implementations, the communication interface 125 is specifically configured to transmit the state information of the I/O device 11 between the rich execution environment REE 110 and the trusted execution environment TEE 120 only when the CVM in the trusted execution environment TEE 120 has an operation requirement for the I/O device 11.

Because the rich execution environment REE 110 provides a common operating system and application environment, and allows a user to freely install and run various applications, when the VM in the rich execution environment REE 110 runs various applications and operating systems, there is a large operation requirement for the I/O device 11. As a result, the state information of the I/O device 11 in the REE buffer is frequently changed, and modification time of the state information of the I/O device 11 in the REE buffer is also frequently updated.

However, the trusted execution environment TEE 120 provides a hardware-level secure and isolated environment, and does not allow a user to freely install and run various applications. Therefore, when the CVM in the trusted execution environment TEE 120 runs a few verified and authorized applications and operating systems, there is a small operation requirement for the I/O device 11. As a result, the state information of the I/O device 11 in the TEE buffer is occasionally changed, and modification time of the state information of the I/O device 11 in the TEE buffer is also occasionally updated.

When the VM in the rich execution environment REE 110 has a large operation requirement for the I/O device 11, but the CVM in the trusted execution environment TEE 120 has a small operation requirement for the I/O device 11, the communication interface 125 transmits the state information of the I/O device 11 between the rich execution environment REE 110 and the trusted execution environment TEE 120 based on a requirement of the CVM, so that utilization of the communication interface 125 can be improved, a quantity of transmissions of the state information can be reduced, and load of the compute device 10 can be reduced.

The communication interface 125 may be implemented by using software, or may be implemented by using hardware, or may be implemented by using a combination of software and hardware. In an example of a software implementation, the communication interface 125 may be implemented by using code run on a compute instance of the trusted execution environment TEE 120. The compute instance may be a confidential virtual machine and/or a container. In an example of a hardware implementation, the communication interface 125 may be implemented by using hardware such as a serial port interface or an Ethernet interface that is allocated by the compute device 10 to the trusted execution environment TEE 120. In an example of an implementation of a combination of software and hardware, the communication interface 125 may be implemented by controlling, by using code run on a compute instance of the trusted execution environment TEE 120, hardware allocated by the compute device 10 to the trusted execution environment TEE 120.

It should be understood that (1) First CVM 121 to (5) Communication interface 125 in (II) Trusted execution environment TEE 120 are described by using an example in which the trusted execution environment TEE 120 includes two CVMs and two TEE buffers. In actual application, there may be one or more CVMs and one or more TEE buffers. This is not specifically limited in this application.

It should be understood that (I) Rich execution environment REE 110 and (II) Trusted execution environment TEE 120 are described by using an example in which the compute device 10 in FIG. 1 includes one REE and one TEE. In actual application, there may be one or more REEs and one or more TEEs. This is not specifically limited in this application.

Based on the architecture of the compute device in FIG. 1, the following specifically describes a method for performing an operation on an I/O device by a CVM according to an embodiment of this application. According to the method for performing an operation on an I/O device by a CVM, state information of the I/O device can be consistent in the REE and the TEE, thereby avoiding a use conflict of the I/O device. To implement consistency of the state information of the I/O device in the REE and the TEE, the following is included: Information about use of the I/O device by the VM in the REE is shared with the CVM in the TEE, and information about use of the I/O device by the CVM in the TEE is shared with the VM in the REE.

FIG. 2 is a schematic flowchart of a method for performing an operation on an I/O device by a CVM according to an embodiment of this application. According to the method for performing an operation on an I/O device by a CVM, a speed of sharing state information of an I/O device between an REE and a TEE can be increased. As shown in FIG. 2, the method for performing an operation on an I/O device by a CVM according to this embodiment of this application includes the following steps.

S201: A first CVM or a first I/O device sends a first I/O request to a communication interface, and correspondingly, the communication interface receives the first I/O request from the first CVM or the first I/O device.

The first I/O request indicates the first CVM to perform a first I/O operation on the first I/O device. The first I/O operation includes reading data from the first I/O device and transmitting the data to an application or a virtual processor in the first CVM, sending data in the application or the virtual processor in the first CVM to the first I/O device, and the like. The virtual processor in the first CVM is a processor occupied by the first CVM in the TEE.

The first CVM may be the first CVM 121 in the compute device 10 in FIG. 1. The first I/O device may be one of the I/O devices 11 in FIG. 1. The communication interface may be the communication interface 125 in the compute device 10 in FIG. 1.

S202: The communication interface determines whether modification time of state information of the first I/O device in a first REE buffer is later than modification time of state information of the first I/O device in a first TEE buffer.

The modification time of the state information of the first I/O device may be a part of metadata of the state information of the first I/O device. The metadata is data that describes the state information, and includes creation time, access permission, a storage location, and the like of the state information. The metadata is stored in an operating system or a file system. Specifically, the modification time of the state information of the first I/O device in the first REE buffer is stored in an operating system or a file system in the REE. The modification time of the state information of the first I/O device in the first TEE buffer is stored in an operating system or a file system in the TEE.

Therefore, the communication interface may obtain the modification time of the state information of the first I/O device in the first REE buffer from the metadata in the operating system or the metadata in the file system in the REE, and obtain the modification time of the state information of the first I/O device in the first TEE buffer from the metadata in the operating system or the metadata in the file system in the TEE.

Then, the communication interface compares the modification time of the state information of the first I/O device in the first REE buffer with the modification time of the state information of the first I/O device in the first TEE buffer, and determines the storage location of the state information indicating a current state of the first I/O device. There are mainly the following two cases:
Case 1: If the modification time of the state information of the first I/O device in the first REE buffer is later than the modification time of the state information of the first I/O device in the first TEE buffer, it indicates that the state information of the first I/O device in the first REE buffer is new, and the state information of the first I/O device in the first TEE buffer is old. Therefore, the state information of the first I/O device stored in the first REE buffer indicates the current state of the first I/O device.
Case 2: If the modification time of the state information of the first I/O device in the first REE buffer is earlier than the modification time of the state information of the first I/O device in the first TEE buffer, it indicates that the state information of the first I/O device in the first REE buffer is old, and the state information of the first I/O device in the first TEE buffer is new. Therefore, the state information of the first I/O device stored in the first TEE buffer indicates the current state of the first I/O device.

The first REE buffer may be the first REE buffer 112 in the compute device 10 in FIG. 1. The first TEE buffer may be the first TEE buffer 122 in the compute device 10 in FIG. 1.

In Case 1 of step S202, S203 is performed; or in Case 2 of step S202, S207 is performed.

S203: The communication interface reads the state information of the first I/O device from the first REE buffer.

Because the first REE buffer is arranged in the REE, and data in the REE may not only be used inside the REE, but also be shared with the TEE, the communication interface in the TEE may read the state information of the first I/O device from the first REE buffer.

S204: The communication interface writes the state information of the first I/O device in the first REE buffer into the first TEE buffer, to replace the state information of the first I/O device in the first TEE buffer with the state information of the first I/O device in the first REE buffer, thereby implementing synchronization between the state information of the first I/O device in the first TEE buffer and the state information of the first I/O device in the first REE buffer.

In some possible implementations, the communication interface may write the state information of the first I/O device in the first REE buffer into the first TEE buffer in a manner like overwrite write (overwrite write), append write (append write), or insert write (insert write).

In a specific implementation, the communication interface uses overwrite write. Specifically, the communication interface writes the state information of the first I/O device in the first REE buffer at a location at which the state information of the first I/O device is stored in the first TEE buffer, to overwrite the original state information of the first I/O device in the first TEE buffer, so that the state information of the first I/O device in the first TEE buffer is replaced with the state information of the first I/O device in the first REE buffer.

In another specific implementation, the communication interface uses append write. Specifically, the communication interface writes the state information of the first I/O device in the first REE buffer at a tail address of the first TEE buffer, to store the state information of the first I/O device in the first REE buffer at the tail address of the first TEE buffer. Replacement of the state information of the first I/O device in the first TEE buffer with the state information of the first I/O device in the first REE buffer is completed by reading only the state information of the first I/O device at the tail address.

In another specific implementation, the communication interface uses insert write. Specifically, the communication interface writes the state information of the first I/O device in the first REE buffer at a specified location in the first TEE buffer. Replacement of the state information of the first I/O device in the first TEE buffer with the state information of the first I/O device in the first REE buffer is completed by reading only the state information of the first I/O device at the specified location.

It should be understood that the foregoing overwrite write, append write, and insert write are merely used as examples, and are not specifically limited herein. In actual application, all manners in which the communication interface can write the state information of the first I/O device in the first REE buffer into the first TEE buffer fall within the protection scope of this application.

S205: The first CVM reads the state information of the first I/O device from the first TEE buffer.

In some possible implementations, there are mainly the following two cases in which the first CVM reads the state information of the first I/O device from the first TEE buffer, to obtain the current state of the first I/O device:
Case 1: The current state of the first I/O device is an idle state.
Case 2: The current state of the first I/O device is an occupied state.

In some possible implementations, different values may be used to represent different states of the first I/O device, that is, different values are used to correspond to different cases of step S205. Case 1 of step S205 may be represented by using a first value, and Case 2 of step S205 may be represented by using a second value. For example, if the first value is 0, it indicates that the current state of the first I/O device is the idle state; and if the second value is 1, it indicates that the current state of the first I/O device is the occupied state. Alternatively, if the first value is A, it indicates that the current state of the first I/O device is the idle state; and if the second value is B, it indicates that the current state of the first I/O device is the occupied state.

In some possible implementations, before the first CVM reads the state information of the first I/O device from the first TEE buffer, there are at least the following two implementations of triggering the first CVM to perform a read operation on the first TEE buffer:

In a specific implementation, the first CVM receives a first notification from the communication interface. The first notification indicates the first CVM to read the state information of the first I/O device from the specified location in the first TEE buffer.

In another specific implementation, the first CVM monitors the first TEE buffer, so that after the communication interface writes the state information of the first I/O device in the first REE buffer into the first TEE buffer, the first CVM may read the state information of the first I/O device from the first TEE buffer in time.

It should be understood that the foregoing implementations of triggering the first CVM to perform the read operation on the first TEE buffer are merely used as examples, and are not specifically limited herein. In actual application, all implementations in which the first CVM can be triggered to perform the read operation on the first TEE buffer fall within the protection scope of this application.

S206: The first CVM performs an operation on the first I/O device based on the state information of the first I/O device.

In some possible implementations, there are at least the following two operations performed by the first CVM based on the state information of the first I/O device:
In a first operation, in correspondence to Case 1 of step S205, the first CVM immediately uses the first I/O device.

Specifically, the first CVM immediately establishes a communication connection to the first I/O device, and performs the first I/O operation on the first I/O device. After completing the first I/O operation, the first CVM immediately releases the first I/O device, and writes, into the first TEE buffer, the state information indicating that the current state of the first I/O device is the idle state. Then, the communication interface performs step S207.

In a second operation, in correspondence to Case 2 of step S205, the first CVM waits for the first I/O device, or preempts the first I/O device.

If the first CVM waits for the first I/O device, after the current state of the first I/O device changes from the occupied state to the idle state, the first CVM establishes a communication connection to the first I/O device, and performs the first I/O operation on the first I/O device.

If the first CVM preempts the first I/O device, the first CVM generates a first interrupt signal indicating to occupy the first I/O device, and sends the first interrupt signal to the first I/O device. After receiving the first interrupt signal, the first I/O device establishes a communication connection to the first CVM, so that the first CVM can perform the first I/O operation on the first I/O device. The first interrupt signal includes information such as a device type, a device address, and a device feature (for example, a supported data format, a transmission rate, and a cache capacity) of the first I/O device.

It should be understood that the first operation and the second operation are merely used as examples. In actual application, the first CVM may further perform another operation based on the state information of the first I/O device. For example, before releasing the first I/O device, the first CVM generates a first release request indicating to release the first I/O device, and sends the first release request to a virtual machine monitor (virtual machine monitor, VMM) in the TEE. Alternatively, the first CVM writes, into a second TEE buffer, the state information indicating that the current state of the first I/O device is the idle state.

S207: The communication interface reads the state information of the first I/O device from the first TEE buffer.

Because the first TEE buffer is arranged in the TEE, and data in the TEE may be used inside the TEE, the communication interface in the TEE may read the state information of the first I/O device from the first TEE buffer.

S208: The communication interface writes the state information of the first I/O device in the first TEE buffer into the first REE buffer, to replace the state information of the first I/O device in the first REE buffer with the state information of the first I/O device in the first TEE buffer, thereby implementing synchronization between the state information of the first I/O device in the first REE buffer and the state information of the first I/O device in the first TEE buffer.

In some possible implementations, the communication interface may write the state information of the first I/O device in the first TEE buffer into the first REE buffer in a manner like overwrite write, append write, or insert write. It should be understood that an implementation in which the communication interface writes the state information of the first I/O device in the first TEE buffer into the first REE buffer is similar to an implementation in which the communication interface writes the state information of the first I/O device in the first REE buffer into the first TEE buffer in step S204. For brevity of the specification, details are not described herein again.

S209: A first VM reads the state information of the first I/O device from the first REE buffer.

In some possible implementations, there are mainly the following two cases in which the first VM reads the state information of the first I/O device from the first REE buffer, to obtain the current state of the first I/O device:
Case 1: The current state of the first I/O device is the idle state.
Case 2: The current state of the first I/O device is the occupied state.

In some possible implementations, before the first VM reads the state information of the first I/O device from the first REE buffer, there are at least the following two implementations of triggering a read operation performed by the first VM on the first REE buffer:
In a specific implementation, the first VM receives a second notification from the communication interface. The second notification indicates the first VM to read the state information of the first I/O device from the first REE buffer.

In another specific implementation, the first VM monitors the first REE buffer, so that after the communication interface writes the state information of the first I/O device in the first TEE buffer into the first REE buffer, the first VM may read the state information of the first I/O device from the first REE buffer in time.

It should be understood that the foregoing implementations of triggering the read operation performed by the first VM on the first REE buffer are merely used as examples, and are not specifically limited herein. In actual application, all implementations in which the read operation performed by the first VM on the first REE buffer can be triggered fall within the protection scope of this application.

S210: The first VM performs an operation on the first I/O device based on the state information of the first I/O device.

It should be understood that an operation performed by the first VM in Case 1 of step S209 is similar to the first operation in step S206, and an operation performed by the first VM in Case 2 of step S209 is similar to the second operation in step S206. For brevity of the specification, details are not described herein again.

In conclusion, when the first CVM in the TEE needs to establish the communication connection to the first I/O device to complete the first I/O request, the state information of the first I/O device in the first REE buffer and the state information of the first I/O device in the first TEE buffer are synchronized through the communication interface in the TEE, so that the state information of the first I/O device in the first REE buffer is the same as that in the first TEE, thereby achieving an effect that the state information of the first I/O device is consistent in the REE and the TEE. Therefore, the first CVM may perform an operation on the first I/O device based on the current state of the first I/O device. For example, when the current state of the first I/O device is the idle state, the first CVM immediately uses the first I/O device; or when the current state of the first I/O device is the occupied state, the first CVM waits for or preempts the first I/O device. In this way, a conflict with use of the first I/O device by the VM in the REE can be avoided.

Further, the communication interface directly reads the state information of the first I/O device from the first REE buffer, and writes the state information of the first I/O device into the first TEE buffer; or the communication interface directly reads the state information of the first I/O device from the first TEE buffer, and writes the state information of the first I/O device into the first REE buffer. In this way, a speed of sharing the state information of the first I/O device between the REE and the TEE can be effectively increased, thereby improving performance of using the first I/O device by the first VM and the first CVM, including a speed, latency, a throughput, response time, and the like of data transmission between the compute device and the first I/O device.

Further, because the state information of the first I/O device is transmitted in this technical solution, security and privacy of data computing in the TEE can still be ensured.

The method for performing an operation on an I/O device by a CVM in FIG. 2 is applicable to a scenario in which state information of one I/O device is synchronized. Based on the architecture of the compute device in FIG. 1 and the method for performing an operation on an I/O device by a CVM in FIG. 2, the following specifically describes another method for performing an operation on an I/O device by a CVM. The method for performing an operation on an I/O device by a CVM is applicable to a scenario in which state information of a plurality of I/O devices is synchronized.

FIG. 3a and FIG. 3b are a schematic flowchart of another method for performing an operation on an I/O device by a CVM according to an embodiment of this application. As shown in FIG. 3a and FIG. 3b, the method for performing an operation on an I/O device by a CVM according to this embodiment of this application includes the following steps.

S301: A first CVM or a first I/O device sends a first I/O request to a communication interface.

S302: The communication interface determines whether modification time of state information of the first I/O device in a first REE buffer is later than modification time of state information of the first I/O device in a first TEE buffer.

When the modification time of the state information of the first I/O device in the first REE buffer is later than the modification time of the state information of the first I/O device in the first TEE buffer, S303 is performed; or when the modification time of the state information of the first I/O device in the first REE buffer is earlier than the modification time of the state information of the first I/O device in the first TEE buffer, S307 is performed.

S303: The communication interface reads the state information of the first I/O device from the first REE buffer.

S304: The communication interface writes the state information of the first I/O device in the first REE buffer into the first TEE buffer, to replace the state information of the first I/O device in the first TEE buffer with the state information of the first I/O device in the first REE buffer, thereby implementing synchronization between the state information of the first I/O device in the first TEE buffer and the state information of the first I/O device in the first REE buffer.

S305: The first CVM reads the state information of the first I/O device from the first TEE buffer.

S306: Perform an operation on the first I/O device based on the state information of the first I/O device.

S307: The communication interface reads the state information of the first I/O device from the first TEE buffer.

S308: The communication interface writes the state information of the first I/O device in the first TEE buffer into the first REE buffer, to replace the state information of the first I/O device in the first REE buffer with the state information of the first I/O device in the first TEE buffer, thereby implementing synchronization between the state information of the first I/O device in the first REE buffer and the state information of the first I/O device in the first TEE buffer.

S309: A first VM reads the state information of the first I/O device from the first REE buffer.

S310: Perform an operation on the first I/O device based on the state information of the first I/O device.

For an execution process of step S301 to step S310, refer to the execution process of step S201 to step S210 in FIG. 2. For brevity of the specification, details are not described herein again.

S311: A second CVM or a second I/O device sends a second I/O request to the communication interface, and correspondingly, the communication interface receives the second I/O request from the second CVM or the second I/O device.

The second I/O request indicates the second CVM to perform a second I/O operation on the second I/O device. The second I/O operation includes reading data from the second I/O device and transmitting the data to an application or a virtual processor in the second CVM, sending data in the application or the virtual processor in the second CVM to the second I/O device, and the like. The virtual processor in the second CVM is a processor occupied by the second CVM in the TEE.

The second CVM may be the second CVM 123 in the compute device 10 in FIG. 1. The second I/O device may be one of the I/O devices 11 in FIG. 1.

S312: The communication interface determines whether modification time of state information of the second I/O device in a second REE buffer is later than modification time of state information of the second I/O device in a second TEE buffer.

The modification time of the state information of the second I/O device may be a part of metadata of the state information of the second I/O device. The metadata is data that describes the state information, and includes creation time, access permission, a storage location, and the like of the state information. The metadata is stored in an operating system or a file system. Specifically, the modification time of the state information of the second I/O device in the second REE buffer is stored in an operating system or a file system in the REE. The modification time of the state information of the second I/O device in the second TEE buffer is stored in an operating system or a file system in the TEE.

Therefore, the communication interface may obtain the modification time of the state information of the second I/O device in the second REE buffer from the metadata in the operating system or the metadata in the file system in the REE, and obtain the modification time of the state information of the second I/O device in the second TEE buffer from the metadata in the operating system or the metadata in the file system in the TEE.

Then, the communication interface compares the modification time of the state information of the second I/O device in the second REE buffer with the modification time of the state information of the second I/O device in the second TEE buffer, and determines the storage location of the state information indicating a current state of the second I/O device. There are mainly the following two cases:
Case 1: If the modification time of the state information of the second I/O device in the second REE buffer is later than the modification time of the state information of the second I/O device in the second TEE buffer, it indicates that the state information of the second I/O device in the second REE buffer is new, and the state information of the second I/O device in the second TEE buffer is old. Therefore, the state information of the second I/O device stored in the second REE buffer indicates the current state of the second I/O device.
Case 2: If the modification time of the state information of the second I/O device in the second REE buffer is earlier than the modification time of the state information of the second I/O device in the second TEE buffer, it indicates that the state information of the second I/O device in the second REE buffer is old, and the state information of the second I/O device in the second TEE buffer is new. Therefore, the state information of the second I/O device stored in the second TEE buffer indicates the current state of the second I/O device.

The second REE buffer may be the second REE buffer 114 in the compute device 10 in FIG. 1. The second TEE buffer may be the second TEE buffer 124 in the compute device 10 in FIG. 1.

In Case 1 of step S312, S313 is performed; or in Case 2 of step S312, S317 is performed.

S313: The communication interface reads the state information of the second I/O device from the second REE buffer.

Because the second REE buffer is arranged in the REE, and data in the REE may not only be used inside the REE, but also be shared with the TEE, the communication interface in the TEE may read the state information of the second I/O device from the second REE buffer.

S314: The communication interface writes the state information of the second I/O device in the second REE buffer into the second TEE buffer, to replace the state information of the second I/O device in the second TEE buffer with the state information of the second I/O device in the second REE buffer, thereby implementing synchronization between the state information of the second I/O device in the second TEE buffer and the state information of the second I/O device in the second REE buffer.

In some possible implementations, the communication interface may write the state information of the second I/O device in the second REE buffer into the second TEE buffer in a manner like overwrite write, append write, or insert write. It should be understood that an implementation in which the communication interface writes the state information of the second I/O device in the second REE buffer into the second TEE buffer is similar to an implementation in which the communication interface writes the state information of the first I/O device in the first REE buffer into the first TEE buffer in step S204 in FIG. 2. For brevity of the specification, details are not described herein again.

S315: The second CVM reads the state information of the second I/O device from the second TEE buffer.

In some possible implementations, there are mainly the following two cases in which the second CVM reads the state information of the second I/O device from the second TEE buffer, to obtain the current state of the second I/O device:
Case 1: The current state of the second I/O device is an idle state.
Case 2: The current state of the second I/O device is an occupied state.

In some possible implementations, different values may be used to represent different states of the second I/O device, that is, different values are used to correspond to different cases of step S315. It should be understood that this is similar to a case in which different values are used to represent different states of the first I/O device in step S205 in FIG. 2. For brevity of the specification, details are not described herein again.

In some possible implementations, before the second CVM reads the state information of the second I/O device from the second TEE buffer, a read operation performed by the second CVM on the second TEE buffer is triggered. It should be understood that an implementation of triggering the read operation performed by the second CVM on the second TEE buffer is similar to an implementation of triggering the read operation performed by the first CVM on the first TEE buffer in step S205 in FIG. 2. For brevity of the specification, details are not described herein again.

S316: The second CVM performs an operation on the second I/O device based on the state information of the second I/O device.

It should be understood that an operation performed by the second CVM in Case 1 of step S315 is similar to the first operation in step S206 in FIG. 2, and an operation performed by the second CVM in Case 2 of step S315 is similar to the second operation in step S206 in FIG. 2. For brevity of the specification, details are not described herein again.

S317: The communication interface reads the state information of the second I/O device from the second TEE buffer.

Because the second TEE buffer is arranged in the TEE, and data in the TEE may be used inside the TEE, the communication interface in the TEE may read the state information of the second I/O device from the second TEE buffer.

S318: The communication interface writes the state information of the second I/O device in the second TEE buffer into the second REE buffer, to replace the state information of the second I/O device in the second REE buffer with the state information of the second I/O device in the second TEE buffer, thereby implementing synchronization between the state information of the second I/O device in the second REE buffer and the state information of the second I/O device in the second TEE buffer.

In some possible implementations, the communication interface may write the state information of the second I/O device in the second TEE buffer into the second REE buffer in a manner like overwrite write, append write, or insert write. It should be understood that an implementation in which the communication interface writes the state information of the second I/O device in the second TEE buffer into the second REE buffer is similar to an implementation in which the communication interface writes the state information of the first I/O device in the first REE buffer into the first TEE buffer in step S204 in FIG. 2. For brevity of the specification, details are not described herein again.

S319: A second VM reads the state information of the second I/O device from the second REE buffer.

In some possible implementations, there are mainly the following two cases in which the second VM reads the state information of the second I/O device from the second REE buffer, to obtain the current state of the second I/O device:
Case 1: The current state of the second I/O device is the idle state.
Case 2: The current state of the second I/O device is the occupied state.

In some possible implementations, before the second VM reads the state information of the second I/O device from the second REE buffer, a read operation performed by the second VM on the second REE buffer is triggered. It should be understood that an implementation of triggering the read operation performed by the second VM on the second REE buffer is similar to an implementation of triggering the read operation performed by the first VM on the first REE buffer in step S209 in FIG. 2. For brevity of the specification, details are not described herein again.

S320: The second VM performs an operation on the second I/O device based on the state information of the second I/O device.

It should be understood that an operation performed by the second VM in Case 1 of step S319 is similar to the first operation in step S206 in FIG. 2, and an operation performed by the second VM in Case 2 of step S319 is similar to the second operation in step S206 in FIG. 2. For brevity of the specification, details are not described herein again.

It should be understood that, in this technical solution, step S301 to step S310 may be first performed, and then step S311 to step S320 are performed; or step S311 to step S320 may be first performed, and then step S301 to step S310 are performed; or steps in step S301 to step S310 and steps in step S311 to step S320 may be performed in an interleaved manner. For example, step S301 is first performed, then step S311 is performed, then step S302 is performed, and then step S312 is performed, ..., or step S311 and step S312 are first performed, and then step S301 and step S302 are performed, ....

In conclusion, when the CVM in the TEE needs to establish a communication connection to the I/O device to complete the I/O request, the state information of the I/O device in the REE buffer and the state information of the I/O device in the TEE buffer are synchronized through the communication interface in the TEE, so that the state information of the I/O device in the REE buffer is the same as the state information of the I/O device in the TEE buffer, thereby achieving an effect that the state information of the I/O device is consistent in the REE and the TEE. Therefore, the CVM may perform an operation on the I/O device based on the current state of the I/O device. In this way, a conflict with use of the I/O device by the VM in the REE can be avoided.

Further, in a process in which the CVM in the TEE and the VM in the REE share the state information of the I/O device, the state information of the I/O device in the TEE is always transmitted to the REE through a same communication interface, or the state information of the I/O device in the REE is always transmitted to the TEE through a same communication interface. In the TEE, only one communication interface is used to transmit the state information of the I/O device. This can reduce complexity of this technical solution, simplify a development process, and further save compute resources and hardware of the TEE. More importantly, compared with a solution in which a plurality of communication interfaces are used, where each communication interface may become an attack target of an insecure device, in this technical solution, only one communication interface is used, so that an attack surface and potential security vulnerabilities can be reduced, and threats to the TEE can be reduced.

Further, because the state information of the first I/O device is transmitted in this technical solution, security and privacy of data computing in the TEE can still be ensured.

II. Second type of compute device and method for performing an operation on an I/O device by a CVM that corresponds to the second compute device

In the second type of compute device, a shadow buffer configured to store state information of the I/O device is added to an REE based on a structure of the type of first compute device. For details, refer to FIG. 4 and descriptions of related content.

FIG. 4 is a diagram of an architecture of another compute device according to an embodiment of this application. As shown in FIG. 4, the architecture includes a compute device 20 and I/O devices 21. The compute device 20 and the I/O device 21 may communicate with each other.

The compute device 20 is an electronic device that can perform computation, processing, and data storage, for example, a server, a supercomputer, a personal computer, a workstation, or a mobile device. The compute device 20 includes a plurality of physical components (that is, hardware). The compute device 20 may execute various compute tasks based on compute resources and storage resources provided by the hardware. The compute resource is hardware and software in the compute device 20 that are used to execute a compute task. The storage resource is hardware and software in the compute device 20 that are used to store data and a program.

The I/O device 21 is a device configured to interact with the outside of the compute device 20.

The I/O device 21 may be the I/O device 11 in FIG. 1. The I/O device 21 is responsible for receiving input information from a user or another device, and transferring output information processed by the compute device 20 to the user or the another device.

The architecture of the compute device shown in FIG. 4 is described by using an example in which the compute device 20 has two I/O devices. In actual application, there may be fewer or more I/O devices 21 that communicate with the compute device 20, and there may be various types of I/O devices. This is not specifically limited herein.

In some possible implementations, a communication process between the compute device 20 and the I/O device 21 is similar to the communication process between the compute device 10 and the I/O device 11 in FIG. 1. For brevity of the specification, details are not described herein again.

In some possible implementations, the compute device 20 includes a rich execution environment REE 210 and a trusted execution environment TEE 220. Hardware (that is, hardware 230 in FIG. 4) occupied by a compute resource of the rich execution environment REE 210 is isolated from hardware (that is, hardware 240 in FIG. 4) occupied by a compute resource of the trusted execution environment TEE 220. The following separately describes the rich execution environment REE 210 and the trusted execution environment TEE 220.

### (I) Rich execution environment REE 210

The rich execution environment REE 210 includes a first VM 211, a first REE buffer 212, a second VM 213, a second REE buffer 214, a shadow buffer 215, and a control module 216. Functions of the first VM 211, the first REE buffer 212, the second VM 213, and the second REE buffer 214 are respectively similar to functions of the first VM 111, the first REE buffer 112, the second VM 113, and the second REE buffer 114 in the rich execution environment REE 110 in the compute device 10 in FIG. 1. For brevity of the specification, details are not described herein again. The following focuses on describing the functions of the shadow buffer 215 and the control module 216.

### (1) Shadow buffer 215

The shadow buffer 215 may be arranged in an internal memory and/or an external memory that are/is allocated by the compute device 20 to the rich execution environment REE 210, and is configured to store state information of an I/O device that is allowed to be accessed by a first CVM 221 and state information of an I/O device that is allowed to be accessed by a second CVM 223.

The shadow buffer 215 may be implemented by using software or hardware. In an example of a software implementation, the shadow buffer 215 may be implemented by using code run on a compute instance of the rich execution environment REE 210. In an example, the compute instance may be a confidential virtual machine and/or a container. In an example of a hardware implementation, the shadow buffer 215 may be implemented by using hardware such as a memory chip or a cache chip allocated by the compute device 20 to the rich execution environment REE 210.

### (2) Control module 216

The control module 216 may be implemented by using software or hardware. In an example of a software implementation, the control module 216 may be implemented by using code run on a compute instance of the rich execution environment REE 210. The compute instance may be a virtual machine and/or a container. Further, there may be one or more compute instances. For example, the control module 216 may include code run on a plurality of virtual machines/containers. It should be noted that the plurality of virtual machines/containers configured to run the code may be distributed in a same region (region), or may be distributed in different regions. In an example of a hardware implementation, the control module 216 may be implemented by using hardware such as a circuit, a memory chip, or a cache chip allocated by the compute device 20 to the rich execution environment REE 210.

### (II) Trusted execution environment TEE 220

The trusted execution environment TEE 220 includes a first CVM 221, a first TEE buffer 222, a second CVM 223, a second TEE buffer 224, and a communication interface 225. Functions of the first CVM 221, the first TEE buffer 222, the second CVM 223, the second TEE buffer 224, and the communication interface 225 are respectively similar to functions of the first CVM 121, the first TEE buffer 122, the second CVM 123, the second TEE buffer 124, and the communication interface 125 in the trusted execution environment TEE 120 in the compute device 10 in FIG. 1. For brevity of the specification, details are not described herein again.

It should be understood that (I) Rich execution environment REE 210 and (II) Trusted execution environment TEE 220 are described by using an example in which the compute device 20 in FIG. 4 includes one REE and one TEE. In actual application, there may be one or more REEs and one or more TEEs. This is not specifically limited in this application.

Based on the architecture of the compute device in FIG. 4, the following specifically describes another method for performing an operation on an I/O device by a CVM according to an embodiment of this application.

FIG. 5 is a schematic flowchart of another method for performing an operation on an I/O device by a CVM according to an embodiment of this application. According to the method for performing an operation on an I/O device by a CVM, stability of sharing state information of an I/O device between an REE and a TEE can be improved. As shown in FIG. 5, the method for performing an operation on an I/O device by a CVM according to this embodiment of this application includes the following steps.

S501: A first CVM or a first I/O device sends a first I/O request to a communication interface, and correspondingly, the communication interface receives the first I/O request from the first CVM or the first I/O device.

The first I/O request indicates the first CVM to perform a first I/O operation on the first I/O device. The first I/O operation includes reading data from the first I/O device and transmitting the data to an application or a virtual processor in the first CVM, sending data in the application or the virtual processor in the first CVM to the first I/O device, and the like.

The first CVM may be the first CVM 221 in the compute device 20 in FIG. 4. The first I/O device may be one of the I/O devices 21 in FIG. 4. The communication interface may be the communication interface 225 in the compute device 20 in FIG. 4.

S502: The communication interface determines whether modification time of state information of the first I/O device in a shadow buffer is later than modification time of state information of the first I/O device in a first TEE buffer.

The modification time of the state information of the first I/O device may be a part of metadata of the state information of the first I/O device. The metadata is data that describes the state information, and includes creation time, access permission, a storage location, and the like of the state information. The metadata is stored in an operating system or a file system. Specifically, the modification time of the state information of the first I/O device in the shadow buffer is stored in an operating system or a file system in the REE. The modification time of the state information of the first I/O device in the first TEE buffer is stored in an operating system or a file system in the TEE.

Therefore, the communication interface may obtain the modification time of the state information of the first I/O device in the shadow buffer from the metadata in the operating system or the metadata in the file system in the REE, and obtain the modification time of the state information of the first I/O device in the first TEE buffer from the metadata in the operating system or the metadata in the file system in the TEE.

Then, the communication interface compares the modification time of the state information of the first I/O device in the shadow buffer with the modification time of the state information of the first I/O device in the first TEE buffer, and determines the storage location of the state information indicating a current state of the first I/O device. There are mainly the following two cases:
Case 1: If the modification time of the state information of the first I/O device in the shadow buffer is later than the modification time of the state information of the first I/O device in the first TEE buffer, it indicates that the state information of the first I/O device in the shadow buffer is new, and the state information of the first I/O device in the first TEE buffer is old. Therefore, the state information of the first I/O device stored in the shadow buffer indicates the current state of the first I/O device.
Case 2: If the modification time of the state information of the first I/O device in the shadow buffer is earlier than the modification time of the state information of the first I/O device in the first TEE buffer, it indicates that the state information of the first I/O device in the shadow buffer is old, and the state information of the first I/O device in the first TEE buffer is new. Therefore, the state information of the first I/O device stored in the first TEE buffer indicates the current state of the first I/O device.

The shadow buffer may be the shadow buffer 215 in the compute device 20 in FIG. 4. The first TEE buffer may be the first TEE buffer 222 in the compute device 20 in FIG. 4.

In Case 1 of step S502, S503 is performed; or in Case 2 of step S502, S507 is performed.

S503: The communication interface reads state information of the first I/O device in a first REE buffer from the shadow buffer.

In some possible implementations, before the communication interface reads the state information of the first I/O device in the first REE buffer from the shadow buffer, a first VM writes the state information of the first I/O device in the first REE buffer into the shadow buffer, to store the state information of the first I/O device in the first REE buffer in the shadow buffer. The state information of the first I/O device in the first REE buffer indicates the current state of the first I/O device.

Specifically, when the first VM obtains operation permission for the first I/O device, the first VM writes, into the first REE buffer, state information indicating that the current state of the first I/O device is an occupied state. Then, the first VM writes the state information of the first I/O device in the first REE buffer into the shadow buffer. When the first VM releases the first I/O device, the first VM writes, into the first REE buffer, state information indicating that the current state of the first I/O device is an idle state. Then, the first VM writes the state information of the first I/O device in the first REE buffer into the shadow buffer. Therefore, the modification time of the state information of the first I/O device in the shadow buffer is later than the modification time of the state information of the first I/O device in the first REE buffer.

In some possible implementations, the first VM may write the state information of the first I/O device in the first REE buffer into the shadow buffer in a manner like overwrite write, append write, or insert write. It should be understood that an implementation in which the first VM writes the state information of the first I/O device in the first REE buffer into the shadow buffer is similar to an implementation in which the communication interface writes the state information of the first I/O device in the first REE buffer into the first TEE buffer in step S204 in FIG. 2. For brevity of the specification, details are not described herein again.

After the state information of the first I/O device in the first REE buffer is stored in the shadow buffer, because the shadow buffer is arranged in the REE, and data in the REE may not only be used inside the REE, but also be shared with the TEE, the communication interface in the TEE may read the state information of the first I/O device from the shadow buffer.

The first REE buffer may be the first REE buffer 212 in the compute device 20 in FIG. 4. The first VM may be the first VM 211 in the compute device 20 in FIG. 4.

S504: The communication interface writes the state information of the first I/O device in the shadow buffer into the first TEE buffer, to replace the state information of the first I/O device in the first TEE buffer with the state information of the first I/O device in the first REE buffer, thereby implementing synchronization between the state information of the first I/O device in the first TEE buffer and the state information of the first I/O device in the first REE buffer.

In some possible implementations, the communication interface may write the state information of the first I/O device in the shadow buffer into the first TEE buffer in a manner like overwrite write, append write, or insert write. It should be understood that an implementation in which the communication interface writes the state information of the first I/O device in the shadow buffer into the first TEE buffer is similar to an implementation in which the communication interface writes the state information of the first I/O device in the first REE buffer into the first TEE buffer in step S204 in FIG. 2. For brevity of the specification, details are not described herein again.

Because the state information of the first I/O device in the shadow buffer is replaced with the state information of the first I/O device in the first REE buffer, after the communication interface writes the state information of the first I/O device in the shadow buffer into the first TEE buffer, the state information of the first I/O device in the first TEE buffer is also replaced with the state information of the first I/O device in the first REE buffer.

S505: The first CVM reads the state information of the first I/O device from the first TEE buffer.

In some possible implementations, there are mainly the following two cases in which the first CVM reads the state information of the first I/O device from the first TEE buffer, to obtain the current state of the first I/O device:
Case 1: The current state of the first I/O device is an idle state.
Case 2: The current state of the first I/O device is an occupied state.

In some possible implementations, different values may be used to represent different states of the first I/O device, that is, different values are used to correspond to different cases of step S505. It should be understood that this is similar to a case in which different values are used to represent different states of the first I/O device in step S205 in FIG. 2. For brevity of the specification, details are not described herein again.

In some possible implementations, before the first CVM reads the state information of the first I/O device from the first TEE buffer, a read operation performed by the first CVM on the first TEE buffer is triggered. It should be understood that an implementation of triggering the read operation performed by the first CVM on the first TEE buffer is similar to an implementation of triggering the read operation performed by the first CVM on the first TEE buffer in step S205 in FIG. 2. For brevity of the specification, details are not described herein again.

S506: The first CVM performs an operation on the first I/O device based on the state information of the first I/O device.

It should be understood that an operation performed by the first CVM in Case 1 of step S505 is similar to the first operation in step S206 in FIG. 2, and an operation performed by the first CVM in Case 2 of step S505 is similar to the second operation in step S206 in FIG. 2. For brevity of the specification, details are not described herein again.

S507: The communication interface reads the state information of the first I/O device from the first TEE buffer.

Because the first TEE buffer is arranged in the TEE, and data in the TEE may be used inside the TEE, the communication interface in the TEE may read the state information of the first I/O device from the first TEE buffer.

S508: The communication interface writes the state information of the first I/O device in the first TEE buffer into the shadow buffer, to store the state information of the first I/O device in the shadow buffer.

In some possible implementations, the communication interface may write the state information of the first I/O device in the first TEE buffer into the shadow buffer in a manner like overwrite write, append write, or insert write. It should be understood that an implementation in which the communication interface writes the state information of the first I/O device in the first TEE buffer into the shadow buffer is similar to an implementation in which the communication interface writes the state information of the first I/O device in the first REE buffer into the first TEE buffer in step S204 in FIG. 2. For brevity of the specification, details are not described herein again.

In some possible implementations, operation permission of the communication interface for the shadow buffer is higher than operation permission of the first VM for the shadow buffer. When an operation performed by the communication interface on the shadow buffer conflicts with an operation performed by the first VM on the shadow buffer, the communication interface performs the operation on the shadow buffer. There are at least the following two implementations:

In a specific implementation, access of the first VM is rejected when the communication interface operates the shadow buffer.

In an example, access of the first VM is rejected by using a termination instruction. When the communication interface and the first VM both perform a write operation on the shadow buffer, the communication interface performs the write operation on the shadow buffer. The communication interface may send the termination instruction to the first VM. The termination instruction is used to immediately terminate the write operation performed by the first VM on the shadow buffer.

In another example, access of the first VM is rejected by using a mutex. In a process in which the communication interface performs a write operation on the shadow buffer, the shadow buffer is locked by using the mutex, to prevent the first VM from performing the write operation on the shadow buffer. Because the first VM does not obtain the mutex, the first VM cannot perform the write operation on the shadow buffer.

In another example, only access of the first VM to a part of the shadow buffer is rejected. When the communication interface and the first VM both perform a write operation at a same location in the shadow buffer, the communication interface performs the write operation at the location in the shadow buffer. The communication interface may reject, by using a termination instruction, a mutex, or the like, access of the first VM to the location in the shadow buffer.

In another specific implementation, access of the communication interface is allowed when the first VM operates the shadow buffer.

In an example, access of the communication interface is implemented by using an interrupt signal. In a process in which the first VM performs a write operation on the shadow buffer, the communication interface sends a second interrupt signal to the first VM. The second interrupt signal is used to terminate a write operation performed by the first VM on the shadow buffer. Then, the communication interface performs the write operation on the shadow buffer. After the communication interface completes the write operation, the first VM continues to perform the write operation on the shadow buffer.

In another example, access of the communication interface is implemented by using a cancellation instruction. In a process in which the first VM performs a write operation on the shadow buffer, the communication interface sends the cancellation instruction to the first VM. The cancellation instruction is used to stop a write operation performed by the first VM on the shadow buffer. Then, the communication interface performs the write operation on the shadow buffer.

It should be understood that the foregoing two implementations are merely used as examples, and are not specifically limited herein. In actual application, implementations in which the operation permission of the communication interface for the shadow buffer is higher than the operation permission of the first VM for the shadow buffer fall within the protection scope of this application.

S509: A control module reads the state information of the first I/O device in the first TEE buffer from the shadow buffer.

Because the shadow buffer is arranged in the REE, and data in the REE may be used inside the REE, a control interface in the REE may read the state information of the first I/O device from the shadow buffer. The control module may be the control module 216 in the compute device 20 in FIG. 4.

S510: The control module writes the state information of the first I/O device in the shadow buffer into the first REE buffer, to replace the state information of the first I/O device in the first REE buffer with the state information of the first I/O device in the first TEE buffer, thereby implementing synchronization between the state information of the first I/O device in the first REE buffer and the state information of the first I/O device in the first TEE buffer.

In some possible implementations, the communication interface may write the state information of the first I/O device in the shadow buffer into the first REE buffer in a manner like overwrite write, append write, or insert write. It should be understood that an implementation in which the control module writes the state information of the first I/O device in the shadow buffer into the first REE buffer is similar to an implementation in which the communication interface writes the state information of the first I/O device in the first REE buffer into the first TEE buffer in step S204 in FIG. 2. For brevity of the specification, details are not described herein again.

Because the state information of the first I/O device in the shadow buffer is replaced with the state information of the first I/O device in the first TEE buffer, after the control module writes the state information of the first I/O device in the shadow buffer into the first REE buffer, the state information of the first I/O device in the first REE buffer is also replaced with the state information of the first I/O device in the first TEE buffer.

In some possible implementations, the control module and the first VM have same operation permission for the first REE buffer. There are at least the following two implementations:
In a specific implementation, access of the first VM is rejected when the control module operates the first REE buffer.

In an example, access of the first VM is rejected by using a mutex. In a process in which the control module performs a write operation on the first REE buffer, the first REE buffer is locked by using the mutex, to prevent the first VM from performing the write operation on the first REE buffer. Because the first VM does not obtain the mutex, the first VM cannot perform the write operation on the first REE buffer.

In another example, access of the first VM is rejected by using a flag bit. In a process in which the control module performs a write operation on the first REE buffer, the control module sets the flag bit of the first REE buffer to a first value, indicating that the first REE buffer is being occupied. The first VM confirms the flag bit before accessing the first REE buffer. When the flag bit is the first value, the first VM is not allowed to access the first REE buffer.

In another specific implementation, access of the control module is rejected when the first VM operates the first REE buffer.

In an example, access of the control module is rejected by using a flag bit. In a process in which the first VM performs a write operation on the first REE buffer, the first VM sets the flag bit of the first REE buffer to a first value, indicating that the first REE buffer is being operated. The control module confirms the flag bit before accessing the first REE buffer. When the flag bit is the first value, the control module is not allowed to access the first REE buffer.

In another example, access of the control module is rejected by using a semaphore. In a process in which the first VM performs a write operation on the first REE buffer, the first VM sets the semaphore of the first REE buffer to a second value, indicating that the first REE buffer is unavailable. The control module confirms the semaphore before accessing the first REE buffer. When the semaphore is the second value, the control module is not allowed to access the first REE buffer.

It should be understood that the foregoing two implementations are merely used as examples, and are not specifically limited herein. In actual application, all implementations in which the control module and the first VM have the same operation permission for the first REE buffer fall within the protection scope of this application.

S511: The first VM reads the state information of the first I/O device from the first REE buffer.

In some possible implementations, there are mainly the following two cases in which the first VM reads the state information of the first I/O device from the first REE buffer, to obtain the current state of the first I/O device:
Case 1: The current state of the first I/O device is the idle state.
Case 2: The current state of the first I/O device is the occupied state.

In some possible implementations, before the first VM reads the state information of the first I/O device from the first REE buffer, a read operation performed by the first VM on the first REE buffer is triggered. It should be understood that an implementation of triggering the read operation performed by the first VM on the first REE buffer is similar to an implementation of triggering the read operation performed by the first VM on the first REE buffer in step S209 in FIG. 2. For brevity of the specification, details are not described herein again.

S512: The first VM performs an operation on the first I/O device based on the state information of the first I/O device.

It should be understood that an operation performed by the first VM in Case 1 of step S511 is similar to the first operation in step S206 in FIG. 2, and an operation performed by the first VM in Case 2 of step S511 is similar to the first operation in step S206 in FIG. 2. For brevity of the specification, details are not described herein again.

In conclusion, when the first CVM in the TEE needs to establish a communication connection to the first I/O device to complete the first I/O request, the state information of the first I/O device in the first REE buffer and the state information of the first I/O device in the first TEE buffer are synchronized through the communication interface in the TEE, so that the state information of the first I/O device in the first REE buffer is the same as that in the first TEE, thereby achieving an effect that the state information of the first I/O device is consistent in the REE and the TEE. Therefore, the first CVM may perform an operation on the first I/O device based on the current state of the first I/O device. In this way, a conflict with use of the first I/O device by the VM in the REE can be avoided.

Further, in a process of sharing, with the first VM in the REE, usage of the first I/O device by the first CVM in the TEE (that is, the state information of the first I/O device), the communication interface first writes the state information of the first I/O device in the first TEE buffer into the shadow buffer in the REE, and then the control module having the same operation permission as the first VM writes the state information of the first I/O device in the shadow buffer into the first REE buffer. When the first REE buffer is not operated, the control module may directly write the state information of the first I/O device in the shadow buffer into the first REE buffer; or when the first REE buffer is operated by the first VM, the control module writes the state information of the first I/O device in the shadow buffer into the first REE buffer after the first VM completes the operation. In this way, an operation conflict on the first REE buffer caused by a fact that the operation permission of the communication interface in the TEE is higher than the operation permission of the first VM in the REE can be avoided, thereby preventing data disorder in the first REE buffer, and helping improve stability of sharing the state information of the first I/O device between the REE and the TEE.

Further, because the state information of the first I/O device is transmitted in this technical solution, security and privacy of data computing in the TEE can still be ensured.

The method for performing an operation on an I/O device by a CVM in FIG. 5 is applicable to a scenario in which state information of one I/O device is synchronized. Based on the architecture of the compute device in FIG. 4 and the method for performing an operation on an I/O device by a CVM in FIG. 5, the following specifically describes another method for performing an operation on an I/O device by a CVM. The method for performing an operation on an I/O device by a CVM is applicable to a scenario in which state information of a plurality of I/O devices is synchronized.

FIG. 6a and FIG. 6b are a schematic flowchart of another method for performing an operation on an I/O device by a CVM according to an embodiment of this application. As shown in FIG. 6a and FIG. 6b, the method for performing an operation on an I/O device by a CVM according to this embodiment of this application includes the following steps.

S601: A first CVM or a first I/O device sends a first I/O request to a communication interface.

S602: The communication interface determines whether modification time of state information of the first I/O device in a shadow buffer is later than modification time of state information of the first I/O device in a first TEE buffer.

When the modification time of the state information of the first I/O device in the shadow buffer is later than the modification time of the state information of the first I/O device in the first TEE buffer, S603 is performed; or when the modification time of the state information of the first I/O device in the shadow buffer is earlier than the modification time of the state information of the first I/O device in the first TEE buffer, S607 is performed.

S603: The communication interface reads state information of the first I/O device in a first REE buffer from the shadow buffer.

S604: The communication interface writes the state information of the first I/O device in the shadow buffer into the first TEE buffer, to replace the state information of the first I/O device in the first TEE buffer with the state information of the first I/O device in the first REE buffer, thereby implementing synchronization between the state information of the first I/O device in the first TEE buffer and the state information of the first I/O device in the first REE buffer.

S605: The first CVM reads the state information of the first I/O device from the first TEE buffer.

S606: The first CVM performs an operation on the first I/O device based on the state information of the first I/O device.

S607: The communication interface reads the state information of the first I/O device from the first TEE buffer.

S608: The communication interface writes the state information of the first I/O device in the first TEE buffer into the shadow buffer, to store the state information of the first I/O device in the shadow buffer.

S609: A control module reads the state information of the first I/O device in the first TEE buffer from the shadow buffer.

S610: The control module writes the state information of the first I/O device in the shadow buffer into the first REE buffer, to replace the state information of the first I/O device in the first REE buffer with the state information of the first I/O device in the first TEE buffer, thereby implementing synchronization between the state information of the first I/O device in the first REE buffer and the state information of the first I/O device in the first TEE buffer.

S611: The first VM reads the state information of the first I/O device from the first REE buffer.

S612: The first VM performs an operation on the first I/O device based on the state information of the first I/O device.

For an execution process of step S601 to step S612, refer to the execution process of step S501 to step S512 in FIG. 5. For brevity of the specification, details are not described herein again.

S613: A second CVM or a second I/O device sends a second I/O request to the communication interface, and correspondingly, the communication interface receives the second I/O request from the second CVM or the second I/O device.

The second I/O request indicates the second CVM to perform a second I/O operation on the second I/O device. The second I/O operation includes reading data from the second I/O device and transmitting the data to an application or a virtual processor in the second CVM, sending data in the application or the virtual processor in the second CVM to the second I/O device, and the like.

The second CVM may be the second CVM 223 in the compute device 20 in FIG. 4. The second I/O device may be one of the I/O devices 21 in FIG. 4.

S614: The communication interface determines whether modification time of state information of the second I/O device in the shadow buffer is later than modification time of state information of the second I/O device in a second TEE buffer.

The modification time of the state information of the second I/O device may be a part of metadata of the state information of the second I/O device. The metadata is data that describes the state information, and includes creation time, access permission, a storage location, and the like of the state information. The metadata is stored in an operating system or a file system. Specifically, the modification time of the state information of the second I/O device in the shadow buffer is stored in an operating system or a file system in the REE. The modification time of the state information of the second I/O device in the second TEE buffer is stored in an operating system or a file system in the TEE.

Therefore, the communication interface may obtain the modification time of the state information of the second I/O device in the shadow buffer from the metadata in the operating system or the metadata in the file system in the REE, and obtain the modification time of the state information of the second I/O device in the second TEE buffer from the metadata in the operating system or the metadata in the file system in the TEE.

Then, the communication interface compares the modification time of the state information of the second I/O device in the shadow buffer with the modification time of the state information of the second I/O device in the second TEE buffer, and determines the storage location of the state information indicating a current state of the second I/O device. There are mainly the following two cases:
Case 1: If the modification time of the state information of the second I/O device in the shadow buffer is later than the modification time of the state information of the second I/O device in the second TEE buffer, it indicates that the state information of the second I/O device in the shadow buffer is new, and the state information of the second I/O device in the second TEE buffer is old. Therefore, the state information of the second I/O device stored in the shadow buffer indicates the current state of the second I/O device.
Case 2: If the modification time of the state information of the second I/O device in the shadow buffer is earlier than the modification time of the state information of the second I/O device in the second TEE buffer, it indicates that the state information of the second I/O device in the shadow buffer is old, and the state information of the second I/O device in the second TEE buffer is new. Therefore, the state information of the second I/O device stored in the second TEE buffer indicates the current state of the second I/O device.

The second TEE buffer may be the second TEE buffer 224 in the compute device 20 in FIG. 4.

In Case 1 of step S614, S615 is performed; or in Case 2 of step S614, S619 is performed.

S615: The communication interface reads state information of the second I/O device in a second REE buffer from the shadow buffer.

In some possible implementations, before the communication interface reads the state information of the second I/O device in the second REE buffer from the shadow buffer, a second VM writes the state information of the second I/O device in the second REE buffer into the shadow buffer, to store the state information of the second I/O device in the second REE buffer in the shadow buffer. The state information of the second I/O device in the second REE buffer indicates the current state of the second I/O device.

Specifically, when the second VM obtains operation permission for the second I/O device, the second VM writes, into the second REE buffer, state information indicating that the current state of the second I/O device is an occupied state. Then, the second VM writes the state information of the second I/O device in the second REE buffer into the shadow buffer. When the second VM releases the second I/O device, the second VM writes, into the second REE buffer, state information indicating that the current state of the second I/O device is an idle state. Then, the second VM writes the state information of the second I/O device in the second REE buffer into the shadow buffer. Therefore, the modification time of the state information of the second I/O device in the shadow buffer is later than the modification time of the state information of the second I/O device in the second REE buffer.

In some possible implementations, the second VM may write the state information of the second I/O device in the second REE buffer into the shadow buffer in a manner like overwrite write, append write, or insert write. It should be understood that an implementation in which the second VM writes the state information of the second I/O device in the second REE buffer into the shadow buffer is similar to an implementation in which the communication interface writes the state information of the first I/O device in the first REE buffer into the first TEE buffer in step S204 in FIG. 2. For brevity of the specification, details are not described herein again.

After the state information of the second I/O device in the second REE buffer is stored in the shadow buffer, because the shadow buffer is arranged in the REE, and data in the REE may not only be used inside the REE, but also be shared with the TEE, the communication interface in the TEE may read the state information of the second I/O device from the shadow buffer.

The second REE buffer may be the second REE buffer 214 in the compute device 20 in FIG. 4. The second VM may be the second VM 213 in the compute device 20 in FIG. 4.

S616: The communication interface writes the state information of the second I/O device in the shadow buffer into the second TEE buffer, to replace the state information of the second I/O device in the second TEE buffer with the state information of the second I/O device in the second REE buffer, thereby implementing synchronization between the state information of the second I/O device in the second TEE buffer and the state information of the second I/O device in the second REE buffer.

In some possible implementations, the communication interface may write the state information of the second I/O device in the shadow buffer into the second TEE buffer in a manner like overwrite write, append write, or insert write. It should be understood that an implementation in which the communication interface writes the state information of the second I/O device in the shadow buffer into the second TEE buffer is similar to an implementation in which the communication interface writes the state information of the first I/O device in the first REE buffer into the first TEE buffer in step S204 in FIG. 2. For brevity of the specification, details are not described herein again.

Because the state information of the second I/O device in the shadow buffer is replaced with the state information of the second I/O device in the second REE buffer, after the communication interface writes the state information of the second I/O device in the shadow buffer into the second TEE buffer, the state information of the second I/O device in the second TEE buffer is also replaced with the state information of the second I/O device in the second REE buffer.

S617: The second CVM reads the state information of the second I/O device from the second TEE buffer.

In some possible implementations, there are mainly the following two cases in which the second CVM reads the state information of the second I/O device from the second TEE buffer, to obtain the current state of the second I/O device:
Case 1: The current state of the second I/O device is the idle state.
Case 2: The current state of the second I/O device is the occupied state.

In some possible implementations, different values may be used to represent different states of the second I/O device, that is, different values are used to correspond to different cases of step S617. It should be understood that this is similar to a case in which different values are used to represent different states of the first I/O device in step S205 in FIG. 2. For brevity of the specification, details are not described herein again.

In some possible implementations, before the second CVM reads the state information of the second I/O device from the second TEE buffer, a read operation performed by the second CVM on the second TEE buffer is triggered. It should be understood that an implementation of triggering the read operation performed by the second CVM on the second TEE buffer is similar to an implementation of triggering the read operation performed by the first CVM on the first TEE buffer in step S205 in FIG. 2. For brevity of the specification, details are not described herein again.

S618: The second CVM performs an operation on the second I/O device based on the state information of the second I/O device.

It should be understood that an operation performed by the second CVM in Case 1 of step S617 is similar to the first operation in step S206 in FIG. 2, and an operation performed by the second CVM in Case 2 of step S617 is similar to the second operation in step S206 in FIG. 2. For brevity of the specification, details are not described herein again.

S619: The communication interface reads the state information of the second I/O device from the second TEE buffer.

Because the second TEE buffer is arranged in the TEE, and data in the TEE may be used inside the TEE, the communication interface in the TEE may read the state information of the second I/O device from the second TEE buffer.

S620: The communication interface writes the state information of the second I/O device in the second TEE buffer into the shadow buffer, to store the state information of the second I/O device in the shadow buffer.

In some possible implementations, the communication interface may write the state information of the second I/O device in the second TEE buffer into the shadow buffer in a manner like overwrite write, append write, or insert write. It should be understood that an implementation in which the communication interface writes the state information of the second I/O device in the second TEE buffer into the shadow buffer is similar to an implementation in which the communication interface writes the state information of the first I/O device in the first REE buffer into the first TEE buffer in step S204 in FIG. 2. For brevity of the specification, details are not described herein again.

In some possible implementations, operation permission of the communication interface for the shadow buffer is higher than operation permission of the second VM for the shadow buffer. When an operation performed by the communication interface on the shadow buffer conflicts with an operation performed by the second VM on the shadow buffer, the communication interface performs the operation on the shadow buffer. In a specific implementation, access of the second VM is rejected when the communication interface operates the shadow buffer. In another specific implementation, access of the communication interface is allowed when the second VM operates the shadow buffer.

S621: The control module reads the state information of the second I/O device in the second TEE buffer from the shadow buffer.

Because the shadow buffer is arranged in the REE, and data in the REE may be used inside the REE, a control interface in the REE may read the state information of the second I/O device from the shadow buffer.

S622: The control module writes the state information of the second I/O device in the shadow buffer into the second REE buffer, to replace the state information of the second I/O device in the second REE buffer with the state information of the second I/O device in the second TEE buffer, thereby implementing synchronization between the state information of the second I/O device in the second REE buffer and the state information of the second I/O device in the second TEE buffer.

In some possible implementations, the communication interface may write the state information of the second I/O device in the shadow buffer into the second REE buffer in a manner like overwrite write, append write, or insert write. It should be understood that an implementation in which the control module writes the state information of the second I/O device in the shadow buffer into the second REE buffer is similar to an implementation in which the communication interface writes the state information of the first I/O device in the first REE buffer into the first TEE buffer in step S204 in FIG. 2. For brevity of the specification, details are not described herein again.

Because the state information of the second I/O device in the shadow buffer is replaced with the state information of the second I/O device in the second TEE buffer, after the control module writes the state information of the second I/O device in the shadow buffer into the second REE buffer, the state information of the second I/O device in the second REE buffer is also replaced with the state information of the second I/O device in the second TEE buffer.

In some possible implementations, the control module and the second VM have same operation permission for the second REE buffer. In a specific implementation, access of the second VM is rejected when the control module operates the second REE buffer. In another specific implementation, access of the control module is rejected when the second VM operates the second REE buffer.

S623: The second VM reads the state information of the second I/O device from the second REE buffer.

In some possible implementations, there are mainly the following two cases in which the second VM reads the state information of the second I/O device from the second REE buffer, to obtain the current state of the second I/O device:
Case 1: The current state of the second I/O device is the idle state.
Case 2: The current state of the second I/O device is the occupied state.

In some possible implementations, before the second VM reads the state information of the second I/O device from the second REE buffer, a read operation performed by the second VM on the second REE buffer is triggered. It should be understood that an implementation of triggering the read operation performed by the second VM on the second REE buffer is similar to an implementation of triggering the read operation performed by the first VM on the first REE buffer in step S209 in FIG. 2. For brevity of the specification, details are not described herein again.

S624: The second VM performs an operation on the second I/O device based on the state information of the second I/O device.

It should be understood that an operation performed by the second VM in Case 1 of step S623 is similar to the first operation in step S206 in FIG. 2, and an operation performed by the second VM in Case 2 of step S623 is similar to the second operation in step S206 in FIG. 2. For brevity of the specification, details are not described herein again.

It should be understood that, in this technical solution, step S601 to step S612 may be first performed, and then step S613 to step S624 are performed; or step S613 to step S624 may be first performed, and then step S601 to step S612 are performed; or steps in step S601 to step S612 and steps in step S613 to step S624 may be performed in a cross manner. For example, step S601 is first performed, then step S613 is performed, then step S602 is performed, and then step S614 is performed, ..., or step S613 and step S614 are first performed, and then step S601 and step S602 are performed, ....

In conclusion, when the CVM in the TEE needs to establish a communication connection to the I/O device to complete the I/O request, the state information of the I/O device in the REE buffer and the state information of the I/O device in the TEE buffer are synchronized through the communication interface in the TEE, so that the state information of the I/O device in the REE buffer is the same as the state information of the I/O device in the TEE buffer, thereby achieving an effect that the state information of the I/O device is consistent in the REE and the TEE. Therefore, the CVM may perform an operation on the I/O device based on the current state of the I/O device. In this way, a conflict with use of the I/O device by the VM in the REE can be avoided.

Further, in a process in which the CVM in the TEE and the VM in the REE share the state information of the I/O device, the communication interface always needs to write only the state information of the I/O device in the TEE into the shadow buffer in the REE, or the communication interface always needs to read only the state information of the I/O device in the REE from the shadow buffer in the REE, and does not need to dynamically adjust an operation object based on an access relationship between the VM in the REE and the I/O device. In this way, an operation is simple and reliable, and a risk of inconsistency or a loss of the state information of the I/O device is also reduced.

Further, because the state information of the first I/O device is transmitted in this technical solution, security and privacy of data computing in the TEE can still be ensured.

In all of the embodiments of FIG. 2, FIG. 3a, FIG. 3b, FIG. 5, FIG. 6a, and FIG. 6b, a virtual input/output (virtual input/output, virtIO) protocol may be used to implement operations performed by the first VM on the first REE buffer and the I/O device and operations performed by the second VM on the second REE buffer and the I/O device in the REE, operations performed by the first CVM on the first TEE buffer and the I/O device and operations performed by the second CVM on the second TEE buffer and the I/O device in the TEE, and the like.

The virtIO protocol includes a front-end driver (front-end driver), a back-end driver (back-end driver), and a virtual ring (virtual ring). The front-end driver is arranged in a virtual machine (for example, a VM or a CVM), and the back-end driver is arranged in a virtual machine monitor. The virtual ring is a communication channel between the front-end driver and the back-end driver.

The following uses an example in which the virtIO protocol is used to implement operations performed by the first VM on the first REE buffer and the I/O device for specific description. The front-end driver is run in the first VM, the back-end driver is run in the virtual machine monitor, and the first REE buffer is used as the virtual ring. In addition, the front-end driver is configured to send, to the back-end driver, data generated by the first VM. The back-end driver is configured to receive data sent by the front-end driver. The first REE buffer is configured to implement data transmission and communication between the front-end driver and the back-end driver.
(1) An operation performed by the first VM on the first REE buffer is implemented by using the virtIO protocol.

The front-end driver encapsulates a data packet generated by the first VM into a descriptor, and writes the descriptor into the first REE buffer. The back-end driver reads the descriptor from the first REE buffer, and obtains the data packet based on the descriptor.

The following uses an example in which a data packet carrying state information of an I/O device is used as a data packet for specific description.

When the first VM generates the data packet carrying the state information of the I/O device, the front-end driver encapsulates the data packet carrying the state information of the I/O device into a descriptor, and writes the descriptor into the first REE buffer. The back-end driver reads the descriptor from the first REE buffer, obtains, based on the descriptor, the data packet carrying the state information of the I/O device, and then obtains a current state of the I/O device.

It should be understood that the data packet carrying the state information of the I/O device is merely used as an example, and is not specifically limited herein. In actual application, the data packet may further carry other information, and the descriptor stored in the first REE buffer may indicate the data packet carrying the other information.

(2) An operation performed by the first VM on the I/O device is implemented by using the virtIO protocol.

The front-end driver is configured to send an I/O request to the back-end driver. The back-end driver is configured to receive the I/O request from the front-end driver, and send the I/O request to a corresponding I/O device, so that the I/O device performs an I/O operation. The first REE buffer is configured to implement transmission and communication of the I/O request between the front-end driver and the back-end driver.

Specifically, when the first VM generates a data packet carrying the I/O request, the front-end driver encapsulates the data packet carrying the I/O request into a descriptor, and writes the descriptor into the first REE buffer. The back-end driver reads the descriptor from the first REE buffer, obtains, based on the descriptor, the data packet carrying the I/O request, and then sends the data packet carrying the I/O request to the corresponding I/O device.

After receiving the data packet, the I/O device completes a corresponding I/O operation based on the I/O request, and sends, to the back-end driver, a data packet carrying an I/O request result.

The back-end driver sends an interrupt signal or a notification to the front-end driver, encapsulates the data packet carrying the I/O request result into a descriptor, and writes the descriptor into the first REE buffer. After receiving the interrupt signal or the notification, the front-end driver reads the descriptor from the first REE buffer, obtains, based on the descriptor, the data packet carrying the I/O request result, and then sends the data packet carrying the I/O request result to an application or a virtual processor in the first VM, so that the application or the virtual processor in the first VM can learn of a completion state of the I/O operation in time. The virtual processor in the first VM is a processor occupied by the first VM in the REE.

Because the virtIO protocol is widely used, in this technical solution, the virtIO protocol is still used, to reduce cross-platform compatibility problems, thereby greatly improving development efficiency.

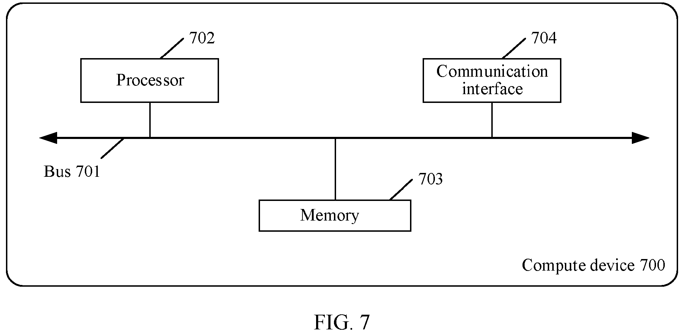

FIG. 7 is a diagram of a structure of a compute device according to an embodiment of this application. As shown in FIG. 7, a compute device 700 provided in this application includes a bus 701, a processor 702, a memory 703, and a communication interface 704. The processor 702, the memory 703, and the communication interface 704 communicate with each other through the bus 701. The compute device 700 may be a server or a terminal device. It should be understood that quantities of processors and memories in the compute device 700 are not limited in this application.

The bus 701 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 7, but this does not mean that there is only one bus or only one type of bus. The bus 701 may include a path for transmitting information between components (for example, the memory 703, the processor 702, and the communication interface 704) of the compute device 700.

The processor 702 may include any one or more of processors such as a central processing unit (central processing unit, CPU), a graphics processing unit (graphics processing unit, GPU), a micro processor (micro processor, MP), or a digital signal processor (digital signal processor, DSP).

The memory 703 may include a volatile memory (volatile memory), for example, a random access memory (random access memory, RAM). The memory 703 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 703 stores executable program code. The processor 702 executes the executable program code to implement the method for performing an operation on an I/O device by a CVM in FIG. 2, or implement the method for performing an operation on an I/O device by a CVM in FIG. 3a and FIG. 3b, or implement the method for performing an operation on an I/O device by a CVM in FIG. 5, or implement the method for performing an operation on an I/O device by a CVM in FIG. 6a and FIG. 6b. In other words, the memory 703 stores instructions for performing the method for performing an operation on an I/O device by a CVM.

The communication interface 704 uses a transceiver module, for example, but not limited to, a network interface card or a transceiver, to implement communication between the compute device 700 and another compute device or a communication network.

An embodiment of this application further provides a computer program product including instructions. The computer program product may be software or a program product that includes the instructions and that can be run on a compute device or be stored in any usable medium. When the computer program product is run on a compute device, the compute device is caused to perform the method for performing an operation on an I/O device by a CVM in FIG. 2, or perform the method for performing an operation on an I/O device by a CVM in FIG. 3a and FIG. 3b, or perform the method for performing an operation on an I/O device by a CVM in FIG. 5, or perform the method for performing an operation on an I/O device by a CVM in FIG. 6a and FIG. 6b.

An embodiment of this application further provides a computer-readable storage medium. The computer-readable storage medium may be any usable medium that can be stored in a compute device, or a data storage device like a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the compute device to perform the method for performing an operation on an I/O device by a CVM in FIG. 2, or perform the method for performing an operation on an I/O device by a CVM in FIG. 3a and FIG. 3b, or perform the method for performing an operation on an I/O device by a CVM in FIG. 5, or perform the method for performing an operation on an I/O device by a CVM in FIG. 6a and FIG. 6b.

It should be understood that, in embodiments of the present invention, both "when" and "if" mean that a device performs corresponding processing in an objective situation, and are not limited to time. The terms do not mean that the device needs to perform a determining action during implementation, and do not mean that there is another limitation.

Finally, it should be noted that the foregoing embodiments are merely intended for describing the technical solutions of the present invention rather than limiting the present invention. Although the present invention is described in detail with reference to the foregoing embodiments, a person of ordinary skill in the art should understand that modifications may still be made to the technical solutions described in the foregoing embodiments or equivalent replacements may still be made to some technical features thereof, and such modifications or replacements do not cause corresponding technical solutions to depart from the protection scope of the technical solutions of embodiments of the present invention.

## Claims

1. A method for performing an operation on an input/output I/O device by a confidential virtual machine CVM, applied to a compute device, wherein the compute device comprises a rich execution environment REE and a trusted execution environment TEE, hardware occupied by a compute resource of the REE is isolated from hardware occupied by a compute resource of the TEE, the TEE comprises a communication interface, a first CVM, and a first TEE buffer, the first CVM is run based on the compute resource of the TEE, and the REE comprises a first REE buffer; and the method comprises:
receiving, by the communication interface, a first I/O request, wherein the first I/O request indicates the first CVM to perform a first I/O operation on a first I/O device;
synchronizing, by the communication interface, state information of the first I/O device in the first TEE buffer and state information of the first I/O device in the first REE buffer, wherein the state information of the first I/O device indicates that a state of the first I/O device is an idle state or an occupied state; and
performing, by the first CVM, an operation on the first I/O device based on the synchronized state information of the first I/O device in the first TEE buffer, wherein the synchronized state information of the first I/O device in the first TEE buffer indicates a current state of the first I/O device.

2. The method according to claim 1, wherein the REE further comprises a shadow buffer, the shadow buffer is configured to store the state information of the first I/O device, and the state information of the first I/O device in the shadow buffer indicates the current state of the first I/O device; and
the synchronizing, by the communication interface, the state information of the first I/O device in the first TEE buffer and the state information of the first I/O device in the first REE buffer comprises:
synchronizing, by the communication interface, the state information of the first I/O device in the first TEE buffer and the state information of the first I/O device in the first REE buffer by using the state information of the first I/O device in the shadow buffer.

3. The method according to claim 2, wherein the REE further comprises a first virtual machine VM, and the first VM is run based on the compute resource of the REE;
before the synchronizing, by the communication interface, the state information of the first I/O device in the first TEE buffer and the state information of the first I/O device in the first REE buffer by using the state information of the first I/O device in the shadow buffer, the method further comprises:
when modification time of the state information of the first I/O device in the first REE buffer is later than modification time of the state information of the first I/O device in the first TEE buffer, writing, by the first VM, the state information of the first I/O device in the first REE buffer into the shadow buffer, to store the state information of the first I/O device in the shadow buffer; and
the synchronizing, by the communication interface, the state information of the first I/O device in the first TEE buffer and the state information of the first I/O device in the first REE buffer by using the state information of the first I/O device in the shadow buffer comprises:
writing, by the communication interface, the state information of the first I/O device in the shadow buffer into the first TEE buffer, to obtain the synchronized state information of the first I/O device in the first TEE buffer, wherein
operation permission of the communication interface for the shadow buffer is higher than operation permission of the first VM for the shadow buffer.

4. The method according to claim 2, wherein the REE further comprises a control module;
the synchronizing, by the communication interface, the state information of the first I/O device in the first TEE buffer and the state information of the first I/O device in the first REE buffer by using the state information of the first I/O device in the shadow buffer comprises:
when modification time of the state information of the first I/O device in the first REE buffer is earlier than modification time of the state information of the first I/O device in the first TEE buffer, writing, by the communication interface, the state information of the first I/O device in the first TEE buffer into the shadow buffer, to store the state information of the first I/O device in the shadow buffer; and
the method further comprises:
writing, by the control module, the state information of the first I/O device in the shadow buffer into the first REE buffer, to obtain the synchronized state information of the first I/O device in the first REE buffer, wherein the synchronized state information of the first I/O device in the first REE buffer indicates the current state of the first I/O device.

5. The method according to any one of claims 1 to 4, wherein the TEE further comprises a second CVM and a second TEE buffer, the second CVM is run based on the compute resource of the TEE, the REE further comprises a second REE buffer, and the method further comprises:
receiving, by the communication interface, a second I/O request, wherein the second I/O request indicates the second CVM to perform a second I/O operation on a second I/O device;
synchronizing, by the communication interface, state information of the second I/O device in the second TEE buffer and state information of the second I/O device in the second REE buffer, wherein the state information of the second I/O device indicates that a state of the second I/O device is the idle state or the occupied state; and
performing, by the second CVM, an operation on the second I/O device based on the synchronized state information of the second I/O device in the second TEE buffer, wherein the synchronized state information of the second I/O device in the second TEE buffer indicates a current state of the second I/O device.

6. The method according to claim 3, wherein
access of the first VM is rejected when the shadow buffer is operated by the communication interface; or
access of the communication interface is allowed when the shadow buffer is operated by the first VM.

7. A compute device, comprising a rich execution environment REE and a trusted execution environment TEE, wherein hardware occupied by a compute resource of the REE is isolated from hardware occupied by a compute resource of the TEE, the TEE comprises a communication interface, a first CVM, and a first TEE buffer, the first CVM is run based on the compute resource of the TEE, and the REE comprises a first REE buffer;
the communication interface is configured to receive a first I/O request, wherein the first I/O request indicates the first CVM to perform a first I/O operation on a first I/O device;
the communication interface is further configured to synchronize state information of the first I/O device in the first TEE buffer and state information of the first I/O device in the first REE buffer, wherein the state information of the first I/O device indicates that a state of the first I/O device is an idle state or an occupied state; and
the first CVM is configured to perform an operation on the first I/O device based on the synchronized state information of the first I/O device in the first TEE buffer, wherein the synchronized state information of the first I/O device in the first TEE buffer indicates a current state of the first I/O device.

8. The device according to claim 7, wherein the REE further comprises a shadow buffer, the shadow buffer is configured to store the state information of the first I/O device, and the state information of the first I/O device in the shadow buffer indicates the current state of the first I/O device; and
the communication interface is specifically configured to synchronize the state information of the first I/O device in the first TEE buffer and the state information of the first I/O device in the first REE buffer by using the state information of the first I/O device in the shadow buffer.

9. The device according to claim 8, wherein the REE further comprises a first virtual machine VM, and the first VM is run based on the compute resource of the REE;
the first VM is configured to: before the communication interface synchronizes the state information of the first I/O device in the first TEE buffer and the state information of the first I/O device in the first REE buffer by using the state information of the first I/O device in the shadow buffer, when modification time of the state information of the first I/O device in the first REE buffer is later than modification time of the state information of the first I/O device in the first TEE buffer, write the state information of the first I/O device in the first REE buffer into the shadow buffer, to store the state information of the first I/O device in the shadow buffer; and
the communication interface is specifically configured to write the state information of the first I/O device in the shadow buffer into the first TEE buffer, to obtain the synchronized state information of the first I/O device in the first TEE buffer, wherein
operation permission of the communication interface for the shadow buffer is higher than operation permission of the first VM for the shadow buffer.

10. The device according to claim 8, wherein the REE further comprises a control module;
the communication interface is specifically configured to: when modification time of the state information of the first I/O device in the first REE buffer is earlier than modification time of the state information of the first I/O device in the first TEE buffer, write the state information of the first I/O device in the first TEE buffer into the shadow buffer, to store the state information of the first I/O device in the shadow buffer; and
the control module is configured to write the state information of the first I/O device in the shadow buffer into the first REE buffer, to obtain the synchronized state information of the first I/O device in the first REE buffer, wherein the synchronized state information of the first I/O device in the first REE buffer indicates the current state of the first I/O device.

11. The device according to any one of claims 7 to 10, wherein the TEE further comprises a second CVM and a second TEE buffer, the second CVM is run based on the compute resource of the TEE, and the REE further comprises a second REE buffer;
the communication interface is further configured to receive a second I/O request, wherein the second I/O request indicates the second CVM to perform a second I/O operation on a second I/O device;
the communication interface is further configured to synchronize state information of the second I/O device in the second TEE buffer and state information of the second I/O device in the second REE buffer, wherein the state information of the second I/O device indicates that a state of the second I/O device is the idle state or the occupied state; and
the second CVM is configured to perform an operation on the second I/O device based on the synchronized state information of the second I/O device in the second TEE buffer, wherein the synchronized state information of the second I/O device in the second TEE buffer indicates a current state of the second I/O device.

12. The device according to claim 9, wherein
access of the first VM is rejected when the shadow buffer is operated by the communication interface; or
access of the communication interface is allowed when the shadow buffer is operated by the first VM.

13. A compute device, comprising a processor and a memory, wherein the memory is configured to store instructions, the processor is configured to execute the instructions, and when the processor executes the instructions, the method according to any one of claims 1 to 6 is implemented.

14. A computer program product comprising instructions, wherein when the instructions are run by a compute device, the compute device is caused to perform the method according to any one of claims 1 to 6.

15. A computer-readable storage medium, comprising computer program instructions, wherein when the computer program instructions are executed by a compute device, the compute device performs the method according to any one of claims 1 to 6.
